(19)

**Europäisches Patentamt**
**European Patent Office**
**Office européen des brevets**

(11) **EP 4 503 599 A1**

(12) **EUROPEAN PATENT APPLICATION**
published in accordance with Art. 153(4) EPC

(43) Date of publication:
05.02.2025 Bulletin 2025/06

(21) Application number: 23779106.6

(22) Date of filing: 24.02.2023

(51) International Patent Classification (IPC):
*H04N 7/18* (2006.01)    *G01S 13/86* (2006.01)
*G06T 7/70* (2017.01)    *G06V 20/52* (2022.01)
*G08B 13/181* (2006.01)    *G08B 13/196* (2006.01)
*G08B 15/00* (2006.01)    *G08B 25/00* (2006.01)

(52) Cooperative Patent Classification (CPC):
G01S 13/86; G06T 7/70; G06V 20/52;
G08B 13/181; G08B 13/196; G08B 15/00;
G08B 25/00; H04N 7/18

(86) International application number:
PCT/JP2023/006794

(87) International publication number:
WO 2023/189076 (05.10.2023 Gazette 2023/40)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.03.2022 JP 2022052014

(71) Applicant: **i-PRO Co., Ltd.**
**Tokyo 108-6014 (JP)**

(72) Inventor: **KOGA Masashi**
**Tokyo 108-6014 (JP)**

(74) Representative: **Eisenführ Speiser**
**Patentanwälte Rechtsanwälte PartGmbB**
**Postfach 10 60 78**
**28060 Bremen (DE)**

(54) **MONITORING SYSTEM AND MONITORING METHOD**

(57) This monitoring system determines, on the basis of radar position information and image capture position information, whether a detected object and an image-captured object are the same object or not, and notifies a user terminal of notification information. The notification information is information associating a first identifier for identifying the detected object, detected object attribute information, a camera image, and captured image attribute information if the detected object and the image-captured object are determined to be the same object, and is information based on at least any of radar installation position information, the detected object attribute information, the image capture position information, and the captured image attribute information if the detected object and the image-captured object are determined not to be the same object.

*FIG. 9*

EP 4 503 599 A1

## Description

Technical Field

The present disclosure relates to a monitoring system and a monitoring method.

Background Art

Patent Document 1 describes a monitoring apparatus that obtains the position of an object in a monitoring area. The monitoring apparatus of Patent Document 1 includes an object detection unit, an imaging unit, an image processing unit, and a control unit. The object detection unit includes an antenna for transmitting and receiving electromagnetic waves having a predetermined beam width in a plurality of directions and detects the presence or absence of an object in the monitoring area from a reflected wave with respect to a transmitted wave and obtains an angle range in which the object exists. When the object detection unit detects an object, the control unit sets a range in the image corresponding to the angle range as an inspection area and controls a pan-tilt-zoom mechanism so that the inspection area is included in the image. The image processing unit specifies the angle at which the object exists by executing image processing in the inspection area in the image.

Citation List

Patent Literature

Patent Document 1: JP 2017-181099A

Summary of Invention

Technical Problem

In Patent Document 1, the detection of an object in the monitoring area by the object detection unit triggers the setting of an inspection area by the imaging unit. Thus, if the object detection unit cannot detect an object existing in the monitoring area, problematically, an alarm cannot be activated to notify of the existence of the object. This leaves room for improvement with respect to Patent Document 1 in terms of, when one of the object detection unit and the imaging unit detects an object, the other can correctly detect the position of the object.

The present disclosure has been made in view of the above-described known circumstances, and an object is to improve the detection accuracy of an object existing in a monitoring area.

Solution to Problem

The present disclosure provides a monitoring system including a radar and at least one camera. The radar includes an antenna unit configured to transmit an electromagnetic wave to a first monitoring area and receive a reflected wave of the electromagnetic wave, a detection unit configured to execute detection processing to detect a presence or absence of an object in the first monitoring area on a basis of the reflected wave, and a control unit configured to generate detected object attribute information indicating an attribute of a detected object detected by the detection unit on a basis of a result of the detection processing and configured to generate radar position information indicating a position of the detected object on a basis of first installation information including an antenna installation position and an antenna direction and information of an antenna field of view. The at least one camera includes an imaging unit configured to image a second monitoring area at least partially overlapping the first monitoring area, and a processing unit configured to obtain imaging position information indicating a position of an imaged object included in a captured image of the second monitoring area on a basis of second installation information including an installation position of the imaging unit and an imaging direction of the imaging unit and information of a field of view of the imaging unit and obtain imaged object attribute information indicating an attribute of the imaged object on a basis of the captured image. The monitoring system includes a determination unit that executes determination processing to determine whether or not the detected object and the imaged object are an identical object on a basis of the radar position information and the imaging position information, and a notification control unit that causes a notification unit that executes notification processing to notify a user of notification information, and the notification information is, in a case where the detected object and the imaged object are an identical object, information in which a first identifier for identifying the detected object, the detected object attribute information, the captured image, and the imaged object attribute information at least are associated together, and is, in a case where the detected object and the imaged object are not an identical object, information based on at least one of the radar position information, the detected object attribute information, the imaging position information, or the imaged object attribute information.

The present disclosure also provides a monitoring method including: transmitting an electromagnetic wave to a first monitoring area and receiving a reflected wave of the electromagnetic wave; executing detection processing to detect a presence or absence of an object in the first monitoring area on a basis of the reflected wave; generating detected object attribute information indicating an attribute of a detected object detected by a detection unit that executes the detection processing on a basis of a result of the detection processing and generates radar position information indicating a position of the detected object on a basis of first installation information including an antenna installation position and an antenna direction and information of an antenna field of view; imaging, with an imaging unit, a second monitoring area at least partially overlapping the first monitoring area; obtaining imaging position information indicating a position of an imaged object included in a captured image of the second monitoring area on a basis of second installation information including an installation position of the imaging unit and an imaging direction of the imaging unit and information of a field of view of the imaging unit and obtaining imaged object attribute information indicating an attribute of the imaged object on a basis of the captured image; executing determination processing to determine whether or not the detected object and the imaged object are an identical object on a basis of the radar position information and the imaging position information; and causing a notification unit that executes notification processing to notify a user of notification information. In a case where the detected object and the imaged object are an identical object, the notification information is information in which a first identifier for identifying the detected object, the detected object attribute information, the captured image, and the imaged object attribute information at least are associated together. In a case where the detected object and the imaged object are not an identical object, the notification information is information based on at least one of the radar position information, the detected object attribute information, the imaging position information, or the imaged object attribute information.

Advantageous Effects of Invention

According to the present disclosure, the detection accuracy of an object present in a monitoring area can be improved.

Brief Description of Drawings

FIG. 1 is a diagram illustrating a system configuration example of a monitoring system.
FIG. 2 is a block diagram illustrating an internal configuration example of a monitoring radar.
FIG. 3 is a block diagram illustrating an internal configuration example of a fixed camera.
FIG. 4 is a block diagram illustrating an internal configuration example of a PTZ camera.
FIG. 5 is a diagram illustrating a correspondence relationship between a radar map and a radar coordinate system and between a camera image and an image coordinate system.
FIG. 6A is a diagram illustrating a schematic example of coordinate conversion between the radar coordinate system, a camera coordinate system, and the image coordinate system.
FIG. 6B is a diagram illustrating a schematic example of coordinate conversion between the radar coordinate system, the camera coordinate system, and the image coordinate system.

FIG. 7 is a flowchart illustrating an example of the operation procedure of initial setting for alignment between coordinates of the monitoring radar and coordinates of the camera.
FIG. 8 is a flowchart illustrating an example of the operation procedure for alignment between coordinates of the monitoring radar and coordinates of the camera.
FIG. 9 is a flowchart illustrating an example of the operation procedure for alignment between coordinates of the monitoring radar and coordinates of the camera.
FIG. 10 is a table illustrating the transition of the radar ID, the camera ID, and the server ID in accordance with the alignment between coordinates of the monitoring radar and coordinates of the camera.
FIG. 11 is a flowchart illustrating an example of the operation procedure for alignment between coordinates of the monitoring radar and coordinates of the PTZ camera.
FIG. 12 is a flowchart illustrating an example of the operation procedure of the initial setting for displaying a list of detected objects and imaged objects.
FIG. 13 is a flowchart illustrating an example of the operation procedure for displaying a list of detected objects and imaged objects.
FIG. 14 is a diagram illustrating an example of a superimposed screen in which a monitoring radar detection area and a camera image are superimposed on a two-dimensional monitoring area map.
FIG. 15 is a diagram illustrating an example of a superimposed screen in which a camera image is superimposed on a three-dimensional monitoring area map.
FIG. 16 is a flowchart illustrating an example of the operation procedure of the initial setting for entry detection of detected objects and imaged objects.
FIG. 17 is a diagram illustrating an example of an alarm activation rule.
FIG. 18 is a flowchart illustrating an example of the operation procedure of entry detection of detected objects and imaged objects.

Description of Embodiments

Hereinafter, embodiments that specifically disclose a monitoring system and a monitoring method according to the present disclosure will be described in detail with reference to the accompanying drawings as appropriate. However, unnecessary details may be omitted from the description. For example, a detailed description of a well-known matter or a redundant description relating to a substantially similar configuration may be omitted. This is to avoid unnecessary redundancy in the following description and to facilitate understanding by those skilled in the art. The accompanying drawings and the following description are provided to enable those skilled in the art to sufficiently understand the present disclosure and are not intended to limit the subject matter described in the claims.

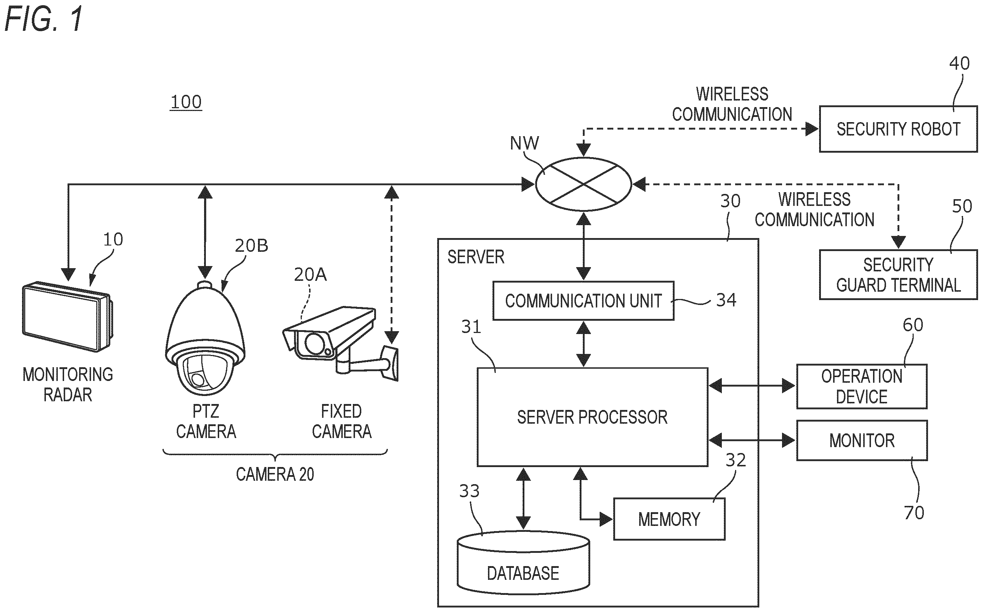

FIG. 1 is a diagram illustrating a system configuration example of a monitoring system 100. The monitoring system 100 according to the present embodiment detects the presence or absence of an object in a monitoring area, tracks the object, and issues notifications relating to the object. The monitoring system 100 includes a monitoring radar 10, a camera 20, a server 30, a security robot 40, and a security guard terminal 50. The camera 20 includes, for example, a fixed camera 20A and a PTZ camera 20B. The camera 20 may include only the fixed camera 20A or the PTZ camera 20B. The monitoring radar 10, the fixed camera 20A, and the PTZ camera 20B are connected to the server 30 via a network NW enabling the communication of data signals with the server 30. The server 30, the security robot 40, and the security guard terminal 50 are connected to one another via the network NW enabling the communication of data signals between one another.

The network NW may be a wired communication network (for example, a wired local area network (LAN) or a wired wide area network (WAN)). The network NW may be a wireless communication network (for example, a Bluetooth® network, a wireless LAN, a long term evolution (LTE) network, or a 5th generation mobile communication system (5G) network). Note that communication between the server 30 and the security robot 40 via the network NW is preferably wireless communication. The communication between the server 30 and the security guard terminal 50 via the network NW is preferably wireless communication.

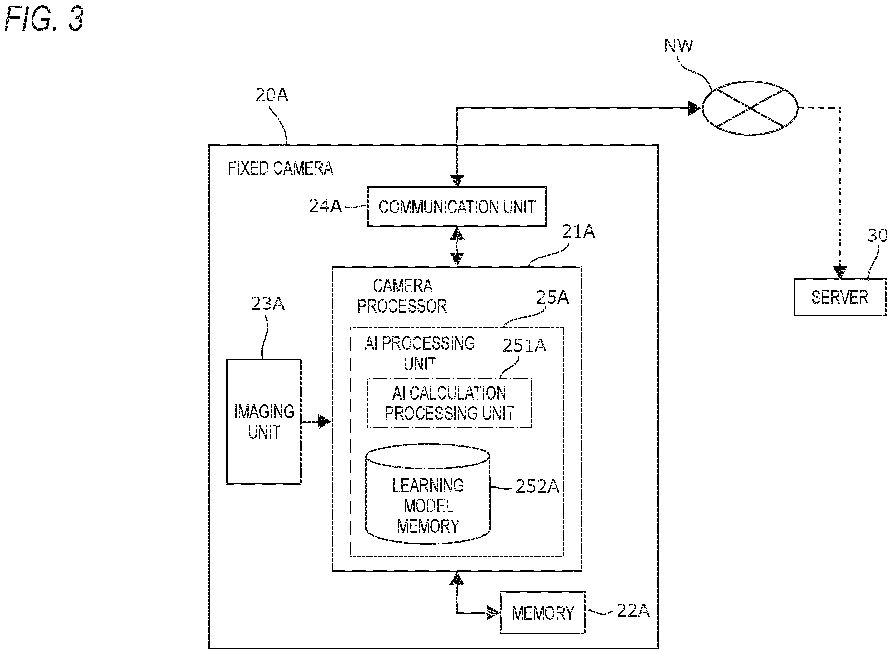

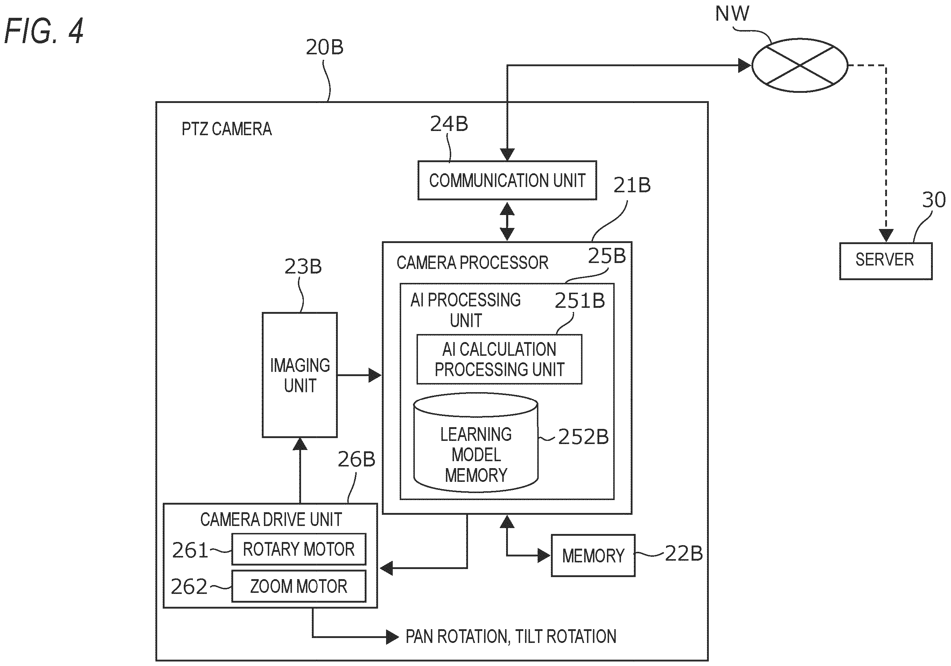

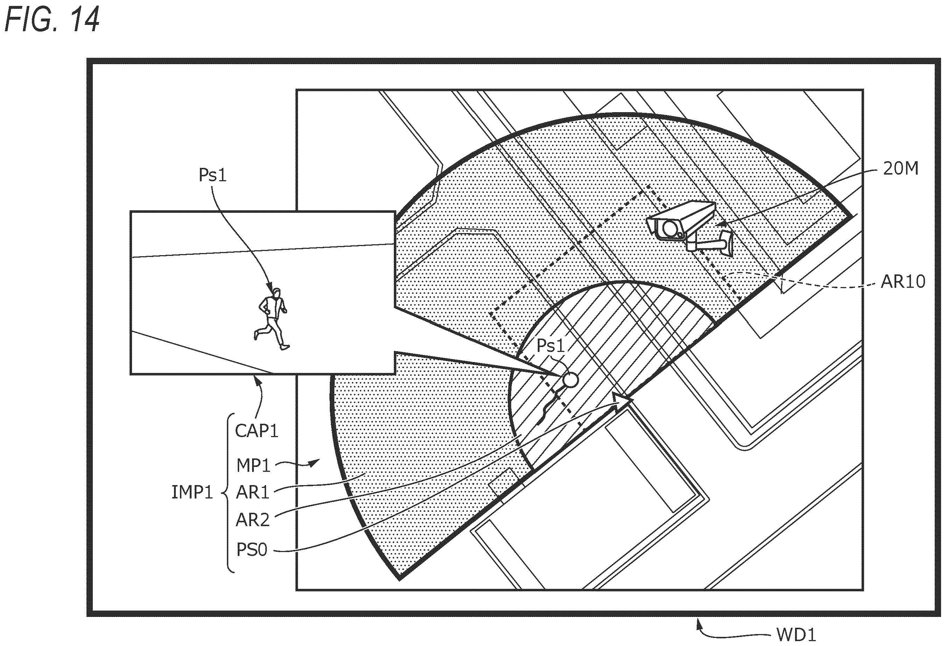

The monitoring radar 10 transmits electromagnetic waves toward a first monitoring area AR1 (see FIG. 14) and receives reflected waves of the transmitted electromagnetic waves. The monitoring radar 10 detects the presence or absence of an object in the first monitoring area AR1 on the basis of a reflected wave. Hereinafter, an object detected by the monitoring radar 10 may be simply referred to as a "detected object". A detailed configuration example of the monitoring radar 10 will be described below. The camera 20 images a second monitoring area AR2 (see FIG. 14) and performs analysis processing (for example, image analysis) on a camera image CAP1 obtained by imaging the second monitoring area AR2. Hereinafter, an object imaged by the camera 20 may be simply referred to as an "imaged object". The monitoring system 100 may include two or more fixed cameras 20A and/or two or more PTZ cameras 20B. A detailed configuration example of the camera 20 will be described below with reference to FIGS. 3 and 4.

The server 30 corresponds to an information processing apparatus (a computer) that notifies a user terminal (for example, the security robot 40, the security guard terminal 50, or a monitor 70) of notification information, which is information the user terminal is to be notified of relating to a detected object and/or an imaged object.

The security robot 40 is communicatively connected to the server 30 via the network NW. The security robot 40 may include, for example, a camera, a speaker, lighting, and the like. The security robot 40 moves and threatens, warns, or performs a similar action targeting a detected object or an imaged object using sound or illumination light. The security robot 40 may image a detected object or an imaged object and transmit the captured image to the server 30. The security robot 40 corresponds to, for example, a multicopter type unmanned aircraft (a socalled drone), a robot that can autonomously move on the basis of a control signal, or the like.

The security guard terminal 50 is an information processing apparatus carried by a security guard and is communicatively connected to the server 30 via the network NW. A security guard terminal 50 is implemented by, for example, a portable information processing apparatus such as a tablet terminal or a smartphone. Note that the monitoring system 100 may include two or more security guard terminals 50.

Next, the internal configuration of the server 30 will be described. The server 30 is implemented by an information processing apparatus such as a personal computer (PC) and includes a server processor 31, a memory 32, a database 33, and a communication unit 34. The server 30 is electrically connected to an operation device 60 and the monitor 70. The database 33 may be installed in an information processing apparatus other than the server 30 or may be connected to the server 30 so as to be able to communicate data signals with the server 30.

The server processor 31 is an arithmetic apparatus such as a central processing unit (CPU), a graphical processing unit (GPU), or a field programmable gate array (FPGA) and functions as a controller that controls the overall operations of the server 30.

The memory 32 includes, for example, a random-access memory (RAM) and a read-only memory (ROM). The RAM is the working memory of the server processor 31 and temporarily stores data and information generated or obtained by the server processor 31. The ROM stores a program that defines the operations of the server processor 31 and stores control data. The memory 32 may further include a storage device such as a flash memory, a solid state drive (SSD), or a hard disk drive (HDD).

The database 33 is, for example, a storage device such as an HDD or an SSD and stores various types of information. Identification information (for example, serial number, ID, or the like) of the monitoring radar 10 and identification information (for example, serial number, ID, or the like) of the camera 20 may be registered (stored).

The communication unit 34 is a communication circuit that communicates data signals with the monitoring radar 10, the fixed camera 20A, the PTZ camera 20B, the security robot 40, and the security guard terminal 50 via the network NW.

The operation device 60 is an input device for inputting a data signal to the server 30 and corresponds to a portable information processing terminal or the like operated by a user (for example, a security guard carrying out their monitoring duties using the monitoring system 100; the same applies hereinafter). The monitor 70 corresponds to a display apparatus that displays the data signal output from the server 30. Note that when the operation device 60 is a touch panel, the operation device 60 and the monitor 70 may be integrally formed.

In the present embodiment, the server processor 31 (an example of a determination unit) executes determination processing to determine whether or not the detected object detected in the first monitoring area AR1 and the imaged object included in the camera image of the second monitoring area AR2 are an identical object.

In addition, in the present embodiment, the server processor 31 (an example of a notification information control unit) generates notification information for a user terminal (for example, the security robot 40, the security guard terminal 50, the monitor 70, or the like) and notifies the user terminal or the like of alarm activation via the communication unit 34.

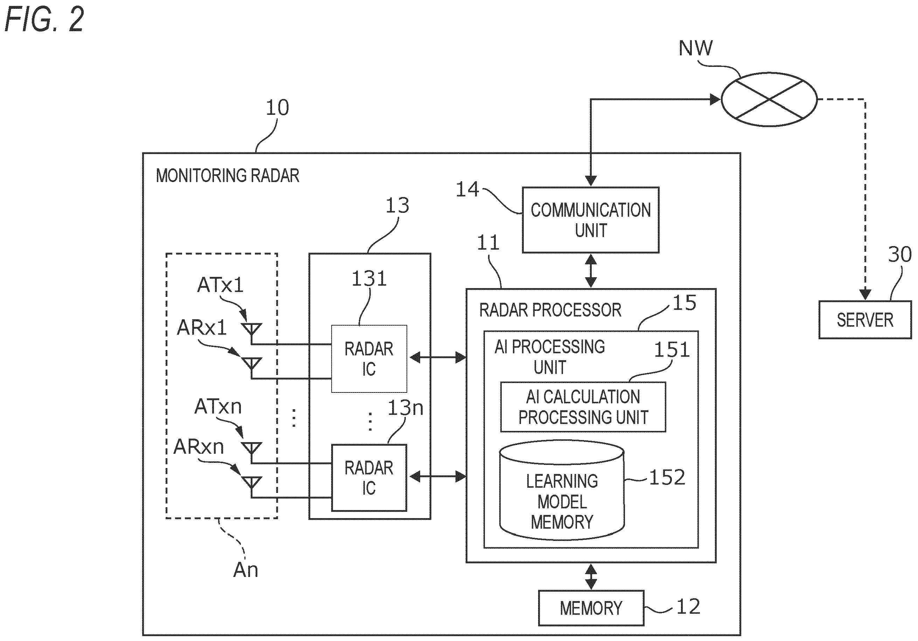

Next, the monitoring radar 10 will be described with reference to FIG. 2. FIG. 2 is a block diagram illustrating an internal configuration example of the monitoring radar 10. The monitoring radar 10 (an example of a radar) includes at least a radar processor 11, a memory 12, a detection unit 13, a communication unit 14, and an antenna unit An.

The radar processor 11 is implemented by, for example, a CPU, a GPU, or an FPGA and functions as a controller that controls the overall operations of the monitoring radar 10. The memory 12 includes a RAM and a ROM. The RAM is a work area used by the radar processor 11 for calculations and temporarily stores data or information generated or obtained by the radar processor 11. The ROM stores a program that defines the operations of the radar processor 11 and stores control data. The memory 12 may further include a storage device such as a flash memory, an SSD, or an HDD.

The radar processor 11 includes an AI processing unit 15 that executes processing using artificial intelligence (AI). The AI processing unit 15 includes an AI calculation processing unit 151 and a learning model memory 152. That is, the monitoring radar 10 can execute various types of processing using AI.

The AI calculation processing unit 151 loads a trained model from the learning model memory 152 and forms a neural network specialized in the processing of the loaded trained model. The learning model memory 152 is implemented by, for example, a flash memory and stores a trained model generated in advance by learning processing.

The trained model according to the present embodiment corresponds to, for example, a model for causing the AI to execute processing for determining the type of the detected object, specifically, whether the detected object is a person, a vehicle, or a two-wheeled vehicle, on the basis of the result of the detection processing. Note that other processing may be used including, for example, using a trained model that causes the AI to obtain the movement speed of the detected object on the basis of the result of the detection processing. The information relating to the type of the detected object is an example of detected object attribute information according to the present embodiment.

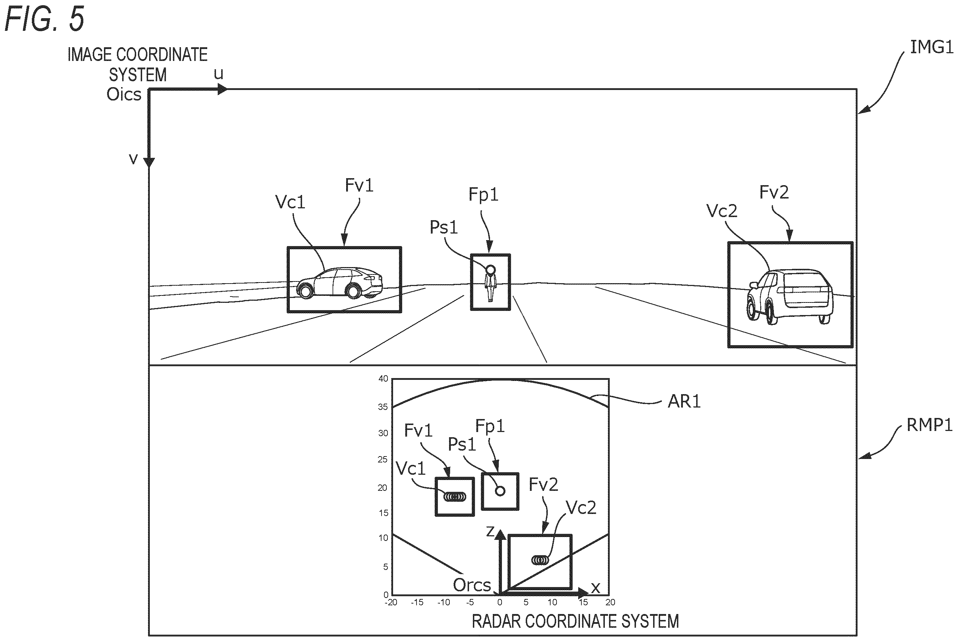

The detection unit 13 includes n (n being an integer equal to or greater than 1) radar ICs 131, ..., 13n. In the following description, when it is not necessary to distinguish between the radar ICs 131, ..., 13n, they may be referred to as "radar IC 13n". The radar IC 13n is a communication circuit that controls, for example, emission of electromagnetic waves having wavelengths of from about 1 mm to 10 mm from a transmission antenna and reception of electromagnetic waves from a reception antenna, and can form beamforming of electromagnetic waves or reflected waves to a directed area (see description below) corresponding to its own radar IC. Different directed areas are set for the radar ICs 131, ..., 13n, respectively. The directed area according to the present embodiment is, for example, a sector-shaped area centered on the radar installation position when the monitoring radar 10 is viewed from above (see FIG. 5). The radar IC 13n executes detection processing for detecting the presence or absence and position of an object on the basis of the reflected wave received from the directed area. The radar IC 13n can obtain information about the movement speed of the detected object on the basis of the result of the detection processing. The information relating to the movement speed of the detected object is an example of detected object attribute information according to the present embodiment.

The antenna unit An includes n (n being an integer equal to or greater than 1) transmission antenna units ATx1, ..., ATxn and n reception antenna units ARx1, ..., ARxn. The antenna unit An includes n pairs of one transmission antenna unit and one reception antenna unit. Specifically, provided are a first pair including the transmission antenna unit ATx1 and the reception antenna unit ARx1, ..., and an n-th pair including the transmission antenna unit ATxn and the reception antenna unit ARxn. The radar ICs are each provided so as to correspond to one of these pairs. That is, the radar IC 131 is connected to the transmission antenna unit ATx1 and the reception antenna unit ARx1 of the first pair. The radar IC 13n is connected to the transmission antenna unit ATxn and the reception antenna unit ARxn of the n-th pair. The transmission antenna units ATx1, ..., ATxn and the reception antenna units ARx1, ..., ARxn each include one antenna or a plurality of antennas.

The transmission antenna units ATx1, ..., ATxn each convert analog signals from the corresponding radar ICs 131, ..., 13n into electromagnetic waves and emit the electromagnetic waves.

Each of the reception antenna units ARx1, ..., ARxn receives a reflected wave obtained by an electromagnetic wave emitted from a corresponding transmission antenna being reflected by an object. The reception antenna units ARx1, ..., ARxn convert the received reflected waves into analog signals and send the analog signals to the corresponding radar ICs 131, ..., 13n.

The communication unit 14 is a communication circuit that communicates data signals with the fixed camera 20A, the PTZ camera 20B, or the server 30.

As described above, with the monitoring radar 10, the radar processor 11 (an example of a determination unit) executes determination processing to determine whether or not the detected object detected in the first monitoring area AR1 and the imaged object included in the camera image of the second monitoring area AR2 are an identical object.

In addition, the radar processor 11 (an example of a notification information control unit) generates notification information for a user terminal (for example, the security robot 40, the security guard terminal 50, and the monitor 70).

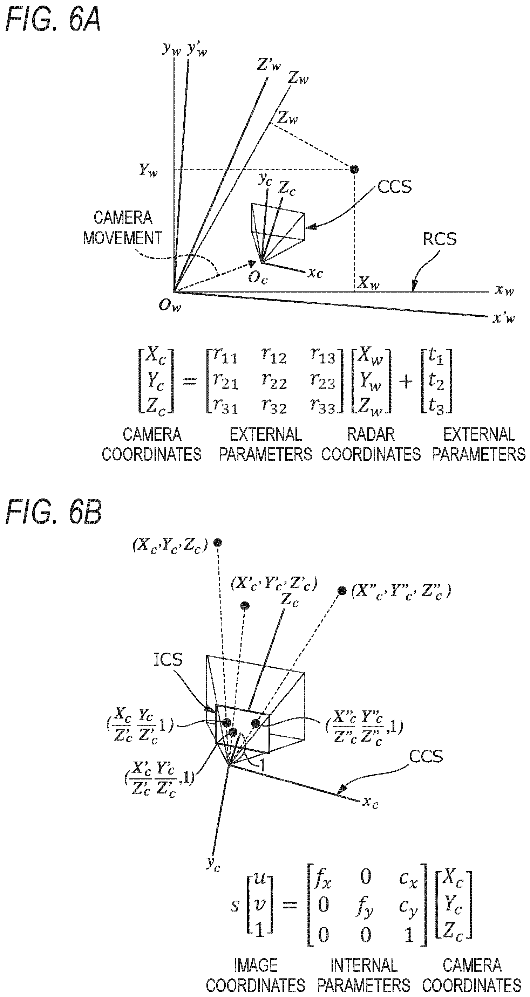

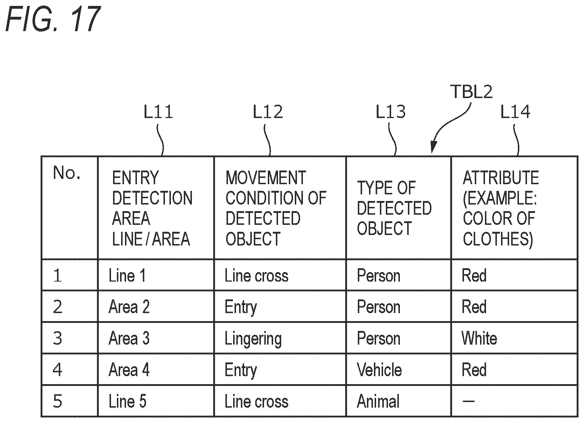

The memory 12 may store information relating to the first monitoring area AR1 (see FIG. 14) indicating an area in which the monitoring radar 10 can detect the position of the detected object, first installation information including the radar installation position (coordinates) and the radar direction, radar field of view information, and alarm activation rule information (see FIG. 17). In addition, the memory 12 may store information relating to the position of a detected object, detected object attribute information, information relating to the position of an imaged object, imaged object attribute information, and the like. In addition, the memory 12 may store information of a calculation formula (see FIG. 6) used for coordinate conversion between coordinates of a radar coordinate system RCS, coordinates of a camera coordinate system CCS, and coordinates of an image coordinate system ICS.

Next, the configuration of the camera 20 will be described with reference to FIGS. 3 and 4. First, the configuration of the fixed camera 20A will be described with reference to FIG. 3. FIG. 3 is a block diagram illustrating an internal configuration example of the fixed camera 20A.

The fixed camera 20A includes at least a camera processor 21A, a memory 22A, an imaging unit 23A, and a communication unit 24A. The fixed camera 20A corresponds to a camera, such as a box camera or a dome camera, whose angle of view cannot be changed after installation.

The camera processor 21A, for example, is a CPU, GPU, or FPGA and functions as a controller that controls the overall operation of the fixed camera 20A. The memory 22A includes a RAM and a ROM. The RAM is a work area used by the camera processor 21A for calculations and temporarily stores data or information generated or obtained by the camera processor 21A. The ROM stores a program that defines the operations of the camera processor 21A and stores control data.

The memory 22A may further include a storage device such as a flash memory, an SSD, or an HDD. The memory 22A stores information relating to the second monitoring area AR2 (see FIG. 14), imaging position information including the camera installation position (coordinates) and the camera direction, camera field of view information, and alarm activation rule information (see FIG. 17). In addition, the memory 22A stores information such as the position of the detected object detected by an AI processing unit 25A, imaged object attribute information, and the like. In addition, the memory 22A stores information of a calculation formula (see FIG. 6) used for coordinate conversion between coordinates of the radar coordinate system RCS, coordinates of the camera coordinate system CCS, and coordinates of the image coordinate system ICS.

The camera processor 21A includes the AI processing unit 25A that executes processing using AI. The AI processing unit 25A includes an AI calculation processing unit 251A and a learning model memory 252A. That is, the fixed camera 20A can execute various types of processing using AI.

The AI calculation processing unit 251A loads a trained model from the learning model memory 252A and forms a neural network specialized in the processing of the loaded trained model. The learning model memory 252A is implemented by, for example, a flash memory and stores a trained model generated in advance by learning processing. The trained model of the learning model memory 252A may be, for example, a model for detecting an object in image data captured by the imaging unit 23A. In addition, the trained model of the learning model memory 252A may be a model that performs attribute classification for extracting imaged object attribute information relating to an object in image data captured by the imaging unit 23A.

The imaging unit 23A images a subject (for example, imaged objects such as persons and vehicles; the same applying hereinafter) in the second monitoring area AR2 (see FIG. 14). The imaging unit 23A includes a lens and an image sensor and captures an optical image of a subject by the image sensor receiving incident light incident on the lens.

The communication unit 24A is a communication circuit that communicates data signals with the monitoring radar 10, the PTZ camera 20B, or the server 30.

Next, the configuration of the PTZ camera 20B will be described with reference to FIG. 4. FIG. 4 is a block diagram illustrating an internal configuration example of the PTZ camera 20B.

The PTZ camera 20B includes at least a camera processor 21B, a memory 22B, an imaging unit 23B, a communication unit 24B, and a camera drive unit 26B. The PTZ camera 20B corresponds to a camera having a pan-tilt-zoom mechanism and that can change the angle of view after installation.

The camera processor 21B, for example, is a CPU, GPU, or FPGA. The camera processor 21B functions as a controller that controls the overall operation of the PTZ camera 20B. The memory 22B includes a RAM and a ROM. The RAM is a work area used by the camera processor 21B for calculations and temporarily stores data or information generated or obtained by the camera processor 21B. The ROM stores a program that defines the operations of the camera processor 21B and stores control data.

The memory 22B may further include a storage device such as a flash memory, an SSD, or an HDD. The memory 22B stores information relating to the second monitoring area AR2 (see FIG. 14), imaging position information including the camera installation position (coordinates) and the camera direction, camera field of view information, and alarm activation rule information (see FIG. 17). In addition, the memory 22B stores information such as the position of the detected object detected by an AI processing unit 25B, imaged object attribute information, and the like. In addition, the memory 22B stores information of a calculation formula (see FIG. 6) used for coordinate conversion between coordinates of the radar coordinate system RCS, coordinates of the camera coordinate system CCS, and coordinates of the image coordinate system ICS.

The camera processor 21B includes an AI processing unit 25B that can execute predetermined signal processing using AI. The AI processing unit 25B includes an AI calculation processing unit 251B and a learning model memory 252B. That is, the PTZ camera 20B can execute various types of processing using AI.

The AI calculation processing unit 251B loads a trained model from the learning model memory 252B and forms a neural network specialized in the processing of the loaded trained model. The learning model memory 252B is implemented by, for example, a flash memory and stores a trained model generated in advance by learning processing. The trained model of the learning model memory 252B may be, for example, a model for detecting an object in image data captured by the imaging unit 23B. In addition, the trained model of the learning model memory 252B may be a model that performs attribute classification for extracting imaged object attribute information relating to an object in image data captured by the imaging unit 23B.

The imaging unit 23B images a subject (for example, detected objects such as persons and vehicles, the same applying hereinafter) in the second monitoring area AR2 (see FIG. 14). The imaging unit 23B includes a lens and an image sensor and captures an optical image of a subject by the image sensor receiving incident light incident on the lens.

The communication unit 24B is a communication circuit that communicates data signals with the monitoring radar 10, the fixed camera 20A, or the server 30.

The camera drive unit 26B includes a rotary motor 261 and a zoom motor 262. The rotary motor 261 is a drive unit for performing pan rotation and/or tilt rotation of the housing of the PTZ camera 20B. The rotary motor 261 performs pan rotation and tilt rotation by being driven in accordance with the motor position calculated by the camera processor 21B. The zoom motor 262 is a drive unit for driving a zoom lens included in the imaging unit 23. The zoom motor 262 is driven in accordance with the motor position calculated by the camera processor 21B to change the optical magnification of the lens included in the imaging unit 23. In this manner, the camera drive unit 26B controls pan rotation and tilt rotation of the housing of the PTZ camera 20B and controls zoom processing using the zoom lens included in imaging unit 23B.

The camera processor 21B calculates a target position of the rotary motor 261 for the imaging unit 23 to image a detected object at a first position (for example, a position at which a moving object is detected) indicated by the radar position information detected by the monitoring radar 10. At this time, the camera processor 21B may calculate, together with the target position of the rotary motor 261, a target position of the zoom motor 262 suitable for the imaging unit 23B to image the detected object at the first position. Specifically, the camera processor 21B calculates the target position of the rotary motor 261 on the basis of the relationship between the position (for example, the current position) of rotary motor 261 held by the PTZ camera 20B and the imaging range (for example, the second monitoring area AR2) in real space and second installation information (for example, the camera installation position and the camera imaging direction of the PTZ camera 20B). Also, the camera processor 21B calculates the target position of zoom motor 262 on the basis of the relationship between the position (for example, the current position) of zoom motor 262 held by the PTZ camera 20B and the imaging range (for example, the second monitoring area AR2) in real space and second installation information (for example, the camera installation position and the camera imaging direction of the PTZ camera 20B).

Next, a correspondence relationship between a radar map RMP1 and a camera image IMG1 according to the present embodiment will be described with reference to FIG. 5. FIG. 5 is a diagram illustrating a correspondence relationship between the radar map RMP1 and the radar coordinate system RCS and between the camera image IMG1 and the image coordinate system ICS. FIG. 5 illustrates the camera image IMG1 captured by the camera 20 when one person Ps1 and two vehicles Vc1 and Vc2 are in the second monitoring area AR2.

The camera image IMG1 is an image captured by the camera 20. FIG. 5 illustrates the image coordinate system ICS with the upper left end point of the camera image IMG1 set as an origin Oics. In the camera image IMG1, the position of the person Ps1 and the positions of the vehicles Vc1 and Vc2 are represented as coordinates in the image coordinate system ICS. For example, the position of the person Ps1 is represented by coordinates (u1, v1) in the image coordinate system ICS. The image coordinate system ICS is a two-dimensional coordinate system. In FIG. 5, the horizontal axis of the camera image IMG1 corresponds to the u-axis of the image coordinate system ICS, and the vertical axis of the camera image IMG1 corresponds to the v-axis of the image coordinate system ICS.

The radar map RMP1 indicates the detection result of the monitoring radar 10 in the first monitoring area AR1 with the installation position of the monitoring radar 10 set as an origin Orcs of the radar coordinate system RCS. The radar map RMP1 corresponds to a detection result of the monitoring radar 10 represented in a visually comprehensible manner. FIG. 5 illustrates the radar map RMP1 with the installation position of the monitoring radar 10 set as the origin Orcs of the radar coordinate system RCS. In the radar map RMP1, the position of the person Ps1 and the positions of the vehicles Vc1 and Vc2 are represented as coordinates in the radar coordinate system RCS. For example, the position of the person Ps1 is represented by coordinates (x1, y1, z1) in the radar coordinate system RCS. The radar coordinate system RCS is a three-dimensional coordinate system. In FIG. 5, the depth direction of the radar map RMP1 is represented by the z-axis (vertical axis in FIG. 5) of the radar coordinate system RCS, one of planes perpendicular to the depth direction of the radar map RMP1 (horizontal axis in FIG. 5) is represented by the x-axis of the radar coordinate system RCS, and the other of the planes perpendicular to the z-axis of the radar map RMP1 is represented by the y-axis of the radar coordinate system RCS. The radar map RMP1 in FIG. 5 illustrates (z-axis, x-axis) direction components of the radar coordinate system RCS as a detection result of the monitoring radar 10.

Here, an outline of the coordinate conversion between the radar coordinate system RCS, the camera coordinate system CCS, and the image coordinate system ICS according to the present embodiment will be described with reference to FIGS. 6A and 6B. FIG. 6A is a diagram illustrating a schematic example of coordinate conversion between the radar coordinate system RCS and the camera coordinate system CCS. FIG. 6B is a diagram illustrating a schematic example of coordinate conversion between the camera coordinate system CCS and the image coordinate system ICS. First, a schematic example of coordinate conversion between the radar coordinate system RCS and the camera coordinate system CCS will be described with reference to FIG. 6A. For example, as illustrated in FIG. 6A, it is possible to perform coordinate conversion between the radar coordinate system RCS and the camera coordinate system CCS by using external parameters of the camera (see Equation (1)).

[Equation 1]

$$\begin{bmatrix} Xc \\ Yc \\ Zc \end{bmatrix} = \begin{bmatrix} r11 & r12 & r13 \\ r21 & r22 & r23 \\ r31 & r32 & r33 \end{bmatrix} \begin{bmatrix} Xw \\ Yw \\ Zw \end{bmatrix} + \begin{bmatrix} t1 \\ t2 \\ t3 \end{bmatrix} \dots (1)$$

In Equation (1), [Xc, Yc, Zc] are camera coordinates in the camera coordinate system CCS. That is, [Xc, Yc, Zc] corresponds to a position in the camera coordinate system CCS as viewed from the origin of the camera coordinate system CCS (that is, the camera installation position of the camera 20). [Xw, Yw, Zw] are radar coordinates in the radar coordinate system RCS. That is, [Xw, Yw, Zw] corresponds to a position in the radar coordinate system RCS as viewed from the origin of the radar coordinate system RCS (that is, the radar installation position of the monitoring radar 10). According to Equation (1), [Xc, Yc, Zc] corresponds to the sum of the product of [Xw, Yw, Zw] and the external parameters indicating the rotation matrix for rotating [Xw, Yw, Zw] indicating the radar coordinates in the radar coordinate system RCS and the external parameters [t1, t2, t3] indicating the movement (translation) of the origin of the radar coordinate system RCS to the origin of the camera coordinate system CCS. As seen in Equation (1), an arbitrary position (coordinates) in the radar coordinate system RCS can be converted into a position (coordinates) in the camera coordinate system CCS. In addition, an arbitrary position (coordinates) in the camera coordinate system CCS can be converted into a position (coordinates) in the radar coordinate system RCS by a modification in which an inverse matrix of the rotation matrix of Equation (1) is found.

Next, a schematic example of coordinate conversion between the camera coordinate system CCS and the image coordinate system ICS will be described with reference to FIG. 6B. As illustrated in FIG. 6B, it is possible to perform coordinate conversion between the camera coordinate system CCS and the image coordinate system ICS by using internal parameters of the camera (see Equation (2)).

[Equation 2]

$$s \begin{bmatrix} u \\ v \\ 1 \end{bmatrix} = \begin{bmatrix} fx & 0 & cx \\ 0 & fy & cy \\ 0 & 0 & 1 \end{bmatrix} \begin{bmatrix} Xc \\ Yc \\ Zc \end{bmatrix} \dots (2)$$

As described above, the image coordinate system ICS is a two-dimensional coordinate system. In this description, it is assumed that the image coordinate system ICS is defined by an image plane projected from the origin of the camera coordinate system CCS (that is, the camera installation position of the camera 20) to a position at the depth s. At this time, a position (u, v) in the image coordinate system ICS as viewed from the origin Oics (see FIG. 5) of the image coordinate system ICS is represented as s[u, v, 1] (see Equation (2)). That is, in Equation (2), s[u, v, 1] corresponds to an element obtained by introducing the coordinates in an image in the image coordinate system ICS into a coordinate system having the same dimensions as the camera coordinate system CCS. [Xc, Yc, Zc] are coordinates in the camera coordinate system CCS. That is, [Xc, Yc, Zc] corresponds to a position in the camera coordinate system CCS as viewed from the origin of the camera coordinate system CCS (that is, the camera installation position of the camera 20). Also, fx and fy are internal parameters indicating the focal length of the camera 20. cx and cy are internal parameters indicating the optical center of the camera 20. Thus, according to Equation (2), the depth s corresponds to the Z-axis element (Zc) in the camera coordinate system CCS. In this manner, as seen in Equation (2), coordinates in the camera coordinate system CCS, which is a three-dimensional coordinate system, can be coordinate-converted into coordinates in the image coordinate system ICS, which is a two-dimensional coordinate system.

As described above with reference to FIGS. 6A and 6B, the radar coordinate system RCS can be coordinate-converted into the camera coordinate system CCS. The camera coordinate system CCS can be coordinate-converted into the image coordinate system ICS. That is, coordinates in the radar coordinate system RCS can be expressed as coordinates in the image coordinate system ICS.

Returning to FIG. 5, the description of the correspondence relationship between the radar map RMP1 and the camera image IMG1 will be continued. First, the correspondence relationship between the radar map RMP1 and the camera image IMG1 in the monitoring radar 10 will be described. In the present embodiment, the radar processor 11 (monitoring radar 10) can execute processing to convert coordinates in the radar coordinate system RCS indicating the positions of the person Ps1 and the vehicles Vc1 and Vc2 into coordinates in the image coordinate system ICS. Specifically, the monitoring radar 10 converts the coordinates (x1, y1, z1) of the person Ps1 in the radar coordinate system RCS into the coordinates (u1, v1) in the image coordinate system ICS by using Equations (1) and (2).

The monitoring radar 10 transmits, to the server 30, the coordinates of person Ps1 and the coordinates of vehicles Vc1 and Vc2 in the image coordinate system ICS after conversion processing from the radar coordinate system RCS to the image coordinate system ICS. The radar processor 11 (monitoring radar 10) may superimpose information (frame Fp1 or the like) indicating the person Ps1 on the coordinates of the person Ps1 in the image coordinate system ICS (see FIG. 5). The radar processor 11 (monitoring radar 10) may superimpose information (frame Fv1, frame Fv2, and the like) indicating the vehicles Vc1 and Vc2 on the coordinates of the vehicles Vc1 and Vc2 in the image coordinate system ICS (see FIG. 5). The coordinates in the image coordinate system ICS where the information such as the frame Fp1, the frame Fv1, and the frame Fv2 is superimposed are sent from the monitoring radar 10 to the server 30. The server 30 may display, on the monitor 70 or the like, a superimposed image of the information such as the frame Fp1, the frame Fv1, and the frame Fv2 superimposed on the radar map RMP1 and the camera image IMG1.

Data of the three-dimensional radar map RMP1 corresponding to the radar coordinate system RCS may be stored in the camera 20, and the camera 20 may convert the coordinates (x1, y1, z1) in the radar coordinate system RCS into the coordinates (u1, v1) in the image coordinate system ICS using Equations (1) and (2).

Next, the correspondence relationship between the radar map RMP1 and the camera image IMG1 in the camera 20 will be described. The camera 20 executes processing to convert the coordinates of the person Ps1 and the vehicles Vc1 and Vc2 in the image coordinate system ICS into a position (coordinates) in the radar coordinate system RCS using Equations (1) and (2). Specifically, the camera 20 converts the coordinates (u1, v1) of the person Ps1 in the image coordinate system ICS into the coordinates (x1, y1, z1) in the radar coordinate system RCS.

The camera 20 transmits, to the monitoring radar 10, the coordinates of person Ps1 and the coordinates of vehicles Vc1 and Vc2 in the image coordinate system ICS after conversion processing from the radar coordinate system RCS to the image coordinate system ICS. The monitoring radar 10 stores data of the three-dimensional radar map RMP1 corresponding to the radar coordinate system RCS in the memory 12 or the like. The radar processor 11 (monitoring radar 10) may superimpose information (frame Fp1 or the like) indicating the person Ps1 on the coordinates of the person Ps1 in the radar coordinate system RCS (see FIG. 5). The radar processor 11 (monitoring radar 10) may superimpose information (frame Fv1, frame Fv2, and the like) indicating the vehicles Vc1 and Vc2 on the coordinates of the vehicles Vc1 and Vc2 in the radar coordinate system RCS (see FIG. 5). The coordinates in the image coordinate system ICS where information such as the frame Fp1, the frame Fv1, and the frame Fv2 is superimposed are sent from the monitoring radar 10 to the server 30. The server 30 may display, on the monitor 70 or the like, a superimposed image of the information such as the frame Fp1, the frame Fv1, and the frame Fv2 superimposed on the radar map RMP1 and the camera image IMG1.

The external parameters and the internal parameters of the camera 20 may be stored in the monitoring radar 10, and the coordinates (u1, v1) in the image coordinate system ICS may be converted into the coordinates (x1, y1, z1) in the radar coordinate system RCS by using Equations (1) and (2) in the monitoring radar 10.

In addition, the database 33 may store information indicating coordinates indicating a predetermined range, position, or the like in the radar coordinate system RCS and/or coordinates indicating a predetermined range, position, or the like in the camera coordinate system CCS.

In the present embodiment, it is possible to accurately convert coordinates in the image coordinate system ICS into coordinates in the camera coordinate system CCS on the basis of the distance from the origin of the camera coordinate system CCS to the positions (coordinates) of two arbitrary points on the projected surface (in other words, the camera image CAP1) separated by a focal distance f, the focal distance f, and the actual distance (actual measurement value or the like) between two arbitrary points on the camera image CAP1. The two arbitrary points on the camera image CAP1 are, for example, a point corresponding to the top of the head of a person and a point corresponding to the feet of the person in terms of the height (average value) of the person. In addition, with a vehicle, the two arbitrary points on the camera image CAP1 are a point corresponding to the top of the vehicle and a point corresponding to the bottom of the wheel. With a vehicle, it is also possible to estimate the vehicle type according to the vehicle height.

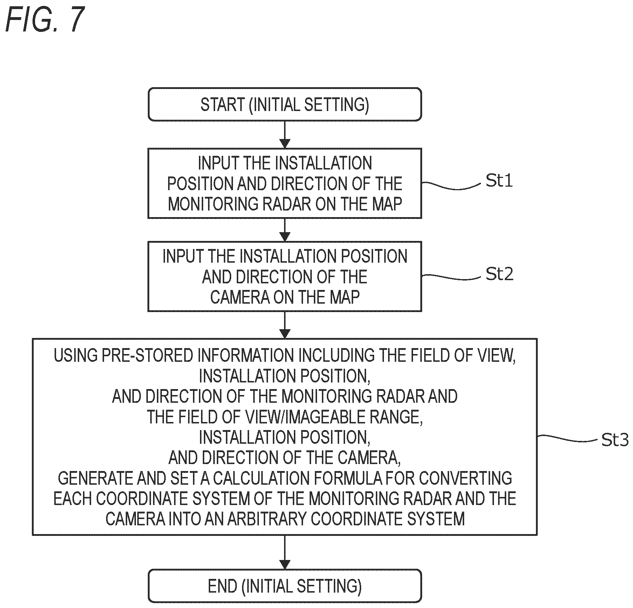

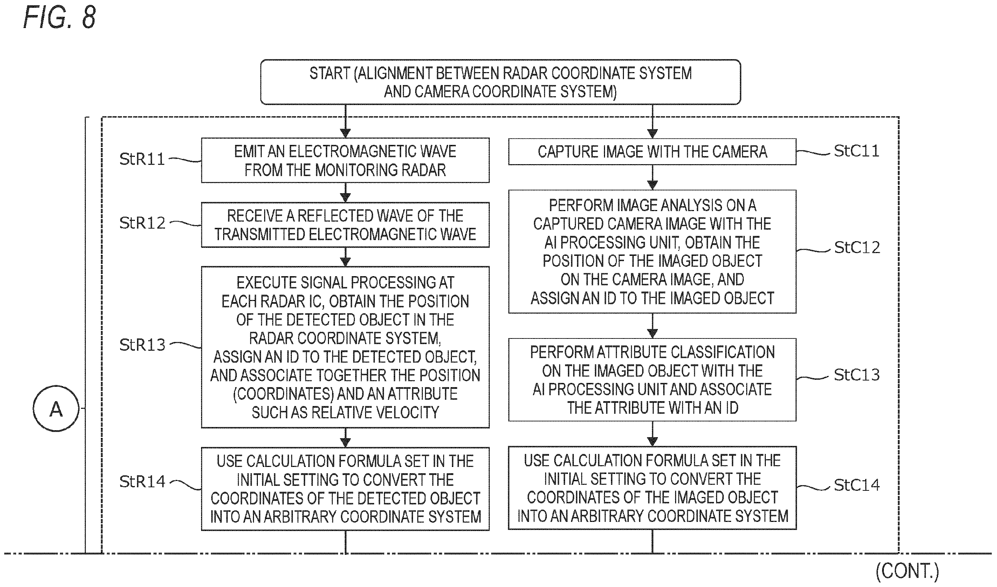

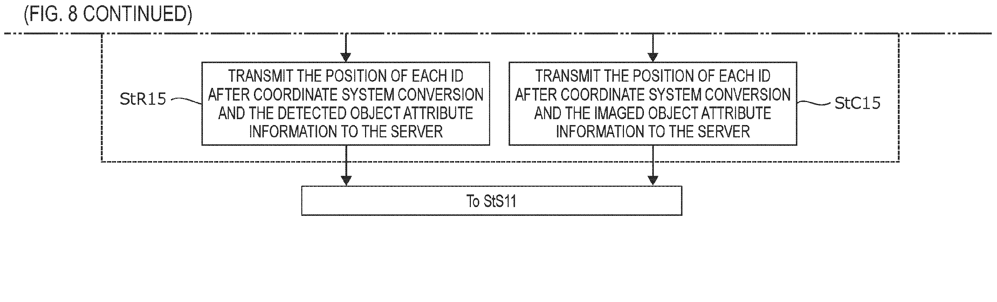

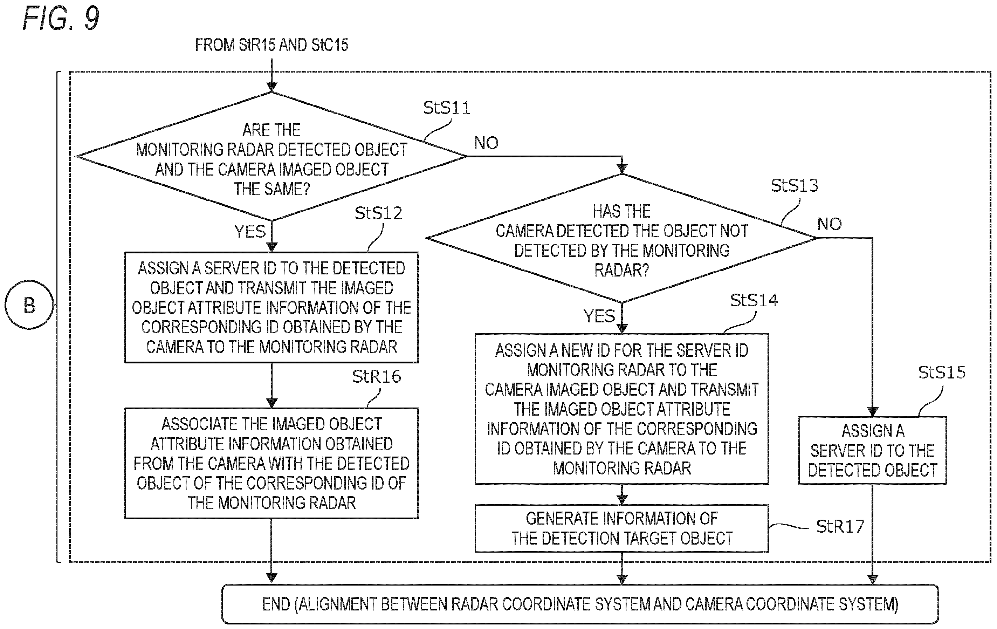

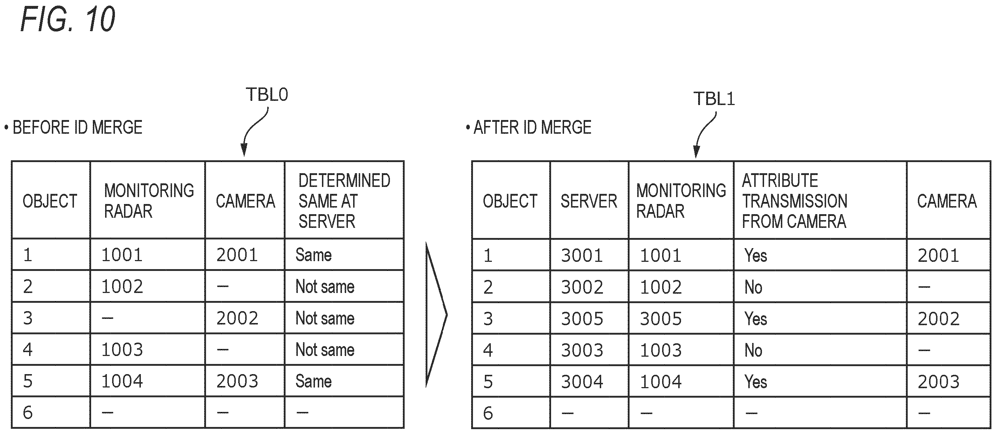

Next, an operation procedure for associating the coordinates of the detected object in the radar coordinate system with the coordinates of the imaged object in the camera coordinate system in the monitoring system 100 will be described. FIG. 7 is a flowchart illustrating an example of the operation procedure of initial setting for alignment between coordinates of the monitoring radar 10 and coordinates of the camera 20. FIGS. 8 and 9 are flowcharts illustrating examples of the operation procedures for alignment between coordinates of the monitoring radar 10 and coordinates of the camera 20. FIG. 10 is a table illustrating the transition of the radar ID, the camera ID, and the server ID in accordance with the alignment between coordinates of the monitoring radar 10 and coordinates of the camera 20. Note that the values and the number of digits of the radar ID, the camera ID, and the server ID are not limited to those illustrated in FIG. 10. In the description of FIGS. 7 to 10, an example in which the fixed camera 20A is used as the camera 20 will be described.

In FIG. 7, information (an example of first installation information) including information of a radar installation position on a map (for example, a site map of a monitoring area) of the monitoring radar 10 and information of the radar direction is input to the server processor 31 by a user operation using the operation device 60 (step St1). Although the information of the radar field of view is stored in monitoring radar 10, the server 30 may pre-store the information of the radar field of view of the monitoring radar 10. A Global Positioning System (GPS) receiver may be provided in monitoring radar 10, and position information of the monitoring radar 10 measured by the GPS may be sent from the monitoring radar 10 to the server 30 as information of the radar installation position to be shared.

Information (an example of second installation information) including information of a camera installation position on a map (for example, a site map of a monitoring area) of the fixed camera 20A and information of a camera imaging direction is input to the server processor 31 by a user using the operation device 60 (step St2). Although the information of the camera field of view is stored in camera 20, the server 30 may pre-store the information of the camera field of view of the fixed camera 20A. The fixed camera 20A may be provided with a GPS receiver, and the position information of the fixed camera 20A measured by the GPS may be sent from the fixed camera 20A to the server 30 as information of the camera installation position to be shared.

The server processor 31 generates and sets a calculation formula using the information obtained in steps St1 and St2 (step St3). In step St3, the server processor 31 generates and sets calculation formulas (Equations (1) and (2): see FIGS. 6A and 6B) for converting the coordinates of the monitoring radar 10 and the coordinates of the fixed camera 20A into coordinates of an arbitrary coordinate system (for example, the radar coordinate system RCS). Thus, the server processor 31 generates a calculation formula in step St3 using information on the radar installation position, the radar direction, and the radar field of view of the monitoring radar 10 and the camera installation position, the camera imaging direction, and the camera field of view of the fixed camera 20A. The server 30 sends the information of the calculation formula generated in step St3 to the fixed camera 20A and the monitoring radar 10. With step St3, the processing series for the initial setting illustrated in FIG. 7 ends. Note that the "arbitrary coordinate system" may be not only a three-dimensional coordinate system (the radar coordinate system RCS or the camera coordinate system CCS) but may also be the two-dimensional image coordinate system ICS.

Next, with reference to FIG. 8, the operation procedure for alignment between coordinates of the monitoring radar 10 and coordinates of the camera 20 will be described. As illustrated in FIG. 8, the monitoring system 100 may execute a series of processing steps (steps StR11 to StR15) executed by the monitoring radar 10 and a series of processing steps (steps StC11 to StC15) executed by the fixed camera 20A in parallel with one another in terms of time.

First, the series of processing steps executed by the monitoring radar 10 will be described. The monitoring radar 10 emits electromagnetic waves in the first monitoring area AR1 (step StR11). The monitoring radar 10 receives the reflected wave of the electromagnetic wave reflected in step StR11 (step StR12). The reflected wave received by the monitoring radar 10 in step StR12 corresponds to a reflected wave when an electromagnetic wave emitted by the monitoring radar 10 in step StR11 is reflected by an object present in the first monitoring area AR1.

The monitoring radar 10 inputs the reflected wave received in step StR12 to the radar IC 13n. The radar IC 13n detects an object present in the first monitoring area AR1 by executing signal processing using the reflected wave. Among the objects present in the first monitoring area AR1, the object detected by the radar IC 13n corresponds to the detected object. The result of the signal processing by the radar IC 13n is sent to the radar processor 11. The radar processor 11 obtains the coordinates in the radar coordinate system RCS indicating the position of the detected object on the basis of the result of the signal processing by the radar IC 13n. In addition, the radar processor 11 may obtain the movement speed of the detected object, the type of the detected object, and the like as the detected object attribute information on the basis of the result of the signal processing result by the radar IC 13n. The radar processor 11 may obtain the movement speed of the detected object obtained by the radar IC 13n. Then, the radar processor 11 assigns a radar ID for identifying the detected object to the object detected by the radar IC 13n among the objects present in the first monitoring area AR1 (the objects 1, 2, 4, and 5 in a table TBL0, see FIG. 10) and associates the detected object attribute information and the radar ID together (step StR13).

In step StR13, the radar ID "1001" is assigned to the object 1. The radar ID "1002" is assigned to the object 2. The radar ID "1003" is assigned to the object 4. The radar ID "1001" is assigned to the object 5 (see FIG. 10).

The radar processor 11 converts the coordinates in the radar coordinate system RCS indicating the position of the detected object assigned with the radar ID into coordinates in an arbitrary coordinate system by using the calculation formula generated in step St3 (see FIG. 7) (step StR14). In the following description, the coordinates obtained by converting the coordinates in the radar coordinate system RCS indicating the position of the detected object into coordinates in an arbitrary coordinate system may be referred to as the "converted detected object coordinates". When the radar coordinate system RCS is the arbitrary coordinate system, the processing of step StR14 can be omitted. The radar processor 11 sends the converted detected object coordinates and the detected object attribute information to the server 30 for each detected object assigned with a radar ID (step StR15). Next, the monitoring system 100 performs the operation of step StS11 (see FIG. 9). The coordinates in the radar coordinate system RCS indicating the position of the detected object are an example of radar position information according to the present embodiment. The converted detected object coordinates are an example of radar position information according to the present embodiment.

Next, a series of processing steps executed by the fixed camera 20A will be described. The fixed camera 20A images the second monitoring area AR2 (step StC11). The image (camera image CAP1) of the second monitoring area AR2 captured by the fixed camera 20A in step StC11 is input to the camera processor 21A from the imaging unit 23A. Next, the camera processor 21A causes the AI processing unit 25A to execute image analysis of the camera image CAP1. Then, the camera processor 21A obtains the position (coordinates in the image coordinate system ICS) of the object included in the camera image CAP1 on the basis of the analysis result of the camera image CAP1 by the AI processing unit 25A (step StC12). The AI calculation processing unit 251A executes, for example, processing to determine the presence or absence of an object included in the camera image CAP1. Among the objects present in the second monitoring area AR2, an object recognized as an object included in the camera image CAP1 via image analysis performed by the AI processing unit 25A corresponds to the imaged object. That is, in step StC12, the camera processor 21A obtains the position of the imaged object. Then, the camera processor 21A assigns a camera ID for identifying an imaged object to the object included in the camera image CAP1 among objects present in the second monitoring area AR2 (step StC12). The camera ID is an example of a second identifier according to the present embodiment.

Next, the camera processor 21A causes the AI processing unit 25A to perform attribute classification to extract imaged object attribute information. The camera processor 21A associates together the imaged object attribute information obtained as a result of the attribute classification processing executed by the AI processing unit 25A and the position of the imaged object and the camera ID (see objects 1, 3, and 5 in the table TBL0 in FIG. 10, step StC13).

In the present embodiment, the attributes of the imaged object indicate a characteristic element of the imaged object. For example, the attribute of the imaged object is at least one of type, gender, age bracket, height, color of clothes, vehicle type, vehicle color, or number plate of the imaged object, a score indicating accuracy (attribute similarity) when the imaged object attribute information is classified, and movement speed of the object. The type of imaged object indicates whether the imaged object is a person, a vehicle, a two-wheeled vehicle, an animal, or the like. The vehicle type indicates the type of vehicle including, for example, sedan, wagon, minivan, and the like. The AI calculation processing unit 251A executes processing to determine whether the imaged object is a person, a vehicle, or a two-wheeled vehicle using the position information of the imaged object and the imaged object attribute information.

In step StC13, the camera ID "2001" is assigned to the object 1. The camera ID "2002" is assigned to the object 3. The camera ID "2003" is assigned to the object 5 (see FIG. 10).

The camera processor 21A converts the coordinates in the image coordinate system ICS indicating the position of the imaged object assigned with the camera ID into coordinates in an arbitrary coordinate system by using the calculation formula of step St3 (see FIG. 7) (step StC14). As described above, the arbitrary coordinate system according to the present embodiment corresponds to the radar coordinate system RCS, that is, the coordinate system of the monitoring radar 10. In the following description, the coordinates in the radar coordinate system RCS indicating the position of the imaged object after being converted into an arbitrary coordinate system may be referred to as the "converted imaged object coordinates". In step StC14, the camera processor 21A converts the coordinates in the image coordinate system ICS into the coordinates in the radar coordinate system RCS. The camera processor 21A sends the converted imaged object coordinates and the imaged object attribute information to the server 30 for each imaged object assigned with a camera ID (step StC15). Next, the monitoring system 100 performs the operation of step StS11 (see FIG. 9). The coordinates in the image coordinate system ICS indicating the position of the imaged object (or the coordinates converted from the image coordinate system ICS into the camera coordinate system CCS) are an example of imaging position information according to the present embodiment. The converted imaged object coordinates are an example of imaging position information according to the present embodiment.

Next, the series of processing steps executed by the monitoring radar 10 will be described with reference to FIG. 9. In FIG. 9, the server processor 31 determines whether or not the detected object and the imaged object are an identical object on the basis of the converted detected object coordinates and the converted imaged object coordinates (step StS11). Specifically, the server processor 31 determines whether or not the converted detected object coordinates of the detected object corresponding to the radar ID sent from the monitoring radar 10 are the same as the converted imaged object coordinates of the imaged object corresponding to the camera ID sent from the fixed camera 20A. When the processing of step StR14 (see FIG. 8) is omitted, the server processor 31 executes the processing of step StS11 on the basis of the coordinates in the radar coordinate system RCS indicating the position of the detected object corresponding to the radar ID sent from the monitoring radar 10 and the converted imaged object coordinates of the imaged object corresponding to the camera ID sent from the fixed camera 20A. Hereinafter, description will be continued under the assumption that the processing of step StR14 is not omitted.

As illustrated in the table TBL0, at the time of step StS11, the objects to which a radar ID is assigned are the objects 1, 2, 4, and 5, and the objects to which a camera ID is assigned are the objects 1, 3, and 5. In the example illustrated in FIG. 10, the server processor 31 executes the processing of step StS11 on the basis of the converted detected object coordinates (or the coordinates in the radar coordinate system RCS) of each of the objects 1, 2, 4, and 5 and the converted imaged object coordinates of each of the objects 1, 3, and 5.

There is a high likelihood that the converted detected object coordinates (or the coordinates in the radar coordinate system RCS) and the converted imaged object coordinates relating to an identical object are the same. That is, the server processor 31 compares the converted detected object coordinates (or the coordinates in the radar coordinate system RCS) corresponding to the radar ID "1001" with the converted imaged object coordinates corresponding to the camera IDs "2001", "2002", and "2003". As illustrated in FIG. 10, the radar ID "1001" and the camera ID "2001" are values assigned to the object 1. In this case, the converted detected object coordinates (or the coordinates in the radar coordinate system RCS) corresponding to the radar ID "1001" and the converted imaged object coordinates corresponding to the camera ID "2001" are a match. That is, in this case, the server processor 31 determines that the detected object corresponding to the radar ID "1001" and the imaged object corresponding to the camera ID "2001" are an identical object. Furthermore, the server processor 31 determines that the detected object corresponding to the radar ID "1004" and the imaged object corresponding to the camera ID "2003" are an identical object.

When the server processor 31 determines that the detected object and the imaged object are an identical object (YES in step StS11), the server processor 31 assigns a server ID (an example of a third identifier) for identifying the detected object determined to be the identical object in association with the radar ID of the detected object determined to be the identical object and the camera ID of the imaged object determined to be the identical object (objects 1 and 5 in a table TBL1, see FIG. 10) (step StS12). The server processor 31 sends the imaged object attribute information corresponding to the camera ID associated with the detected object assigned with the server ID and the radar ID associated with the detected object assigned with the server ID to the monitoring radar 10 (step StS12). That is, in step StS12, the imaged object attribute information is sent from the server 30 to the monitoring radar 10.

In step StS12, the server processor 31 assigns the server ID "3001" to the radar ID "1001" and the camera ID "2001" and assigns the server ID "3004" to the radar ID "1004" and the camera ID "2003" (see FIG. 10).

Relating to the detected object corresponding to the radar ID sent from the server 30 in step StS12, the radar processor 11 associates together the detected object attribute information obtained by the monitoring radar 10 and the imaged object attribute information associated with the radar ID (step StR16). The imaged object attribute information of the imaged object associated with the radar ID corresponds to the imaged object attribute information obtained by the fixed camera 20A relating to the imaged object determined to be the identical object as the detected object corresponding to the radar ID in step StS11.

That is, in step StR16, the radar processor 11 associates the imaged object attribute information relating to the camera ID "2001" corresponding to the server ID "3001" to the radar ID "1001". Also, in step StR16, the radar processor 11 associates the imaged object attribute information relating to the camera ID "2003" corresponding to the server ID "3004" to the radar ID "1004".

In this manner, the monitoring radar 10 can obtain the detected object attribute information obtained by the monitoring radar 10 relating to the detected object assigned with the server ID and the imaged object attribute information obtained by the fixed camera 20A. In the monitoring system 100, after step StR16, the processing illustrated in FIGS. 8 and 9 is repeated.

In the monitoring system 100, as a result of the processing in FIGS. 8 and 9, notification of information is possible in which the camera image and the imaged object attribute information are associated with the radar ID for identifying the detected object and the detected object attribute information of the object corresponding to the radar ID. For example, the server processor 31 and the radar processor 11 display, on a user terminal such as the monitor 70, a superimposed image in which information such as the frame Fp1, the frame Fv1, and the frame Fv2 is superimposed on the radar map RMP1 and the camera image IMG1 as information in which the camera image and the imaged object attribute information are associated with the radar ID for identifying the detected object. The superimposed image in which information such as the frame Fp1, the frame Fv1, and the frame Fv2 is superimposed on the radar map RMP1 and the camera image IMG1 is an example of notification information according to the present embodiment.

That is, in the series of processing steps in FIG. 9, when the server processor 31 determines that the detected object and the imaged object are an identical object, the server processor 31 generates the notification information by associating the camera image and the imaged object attribute information with the radar ID for identifying the detected object and the detected object attribute information of the object corresponding to the radar ID. Also, in the series of processing steps in FIG. 9, when the radar processor 11 determines that the detected object and the imaged object are an identical object, the radar processor 11 generates the notification information by associating the camera image and the imaged object attribute information with the radar ID for identifying the detected object and the detected object attribute information of the object corresponding to the radar ID.

On the other hand, in step StS11, when it is determined that the detected object and the imaged object are not an identical object (NO in step StS11), the server processor 31 executes the processing of step StS13. In step StS13, the server processor 31 determines whether or not an object not detected by the monitoring radar 10 has been imaged by the fixed camera 20A on the basis of the converted detected object coordinates and the converted imaged object image (step StS13).

As illustrated in the table TBL0, at the time of step StS11, the objects to which a radar ID is assigned are the objects 1, 2, 4, and 5, and the objects to which a camera ID is assigned are the objects 1, 3, and 5. Since the objects 1 and 5 are determined to be YES in Step StS11, the server processor 31 executes the processing of Step StS13 on the basis of the converted imaged object coordinates of the object 3 in the example illustrated in FIG. 10.

That is, the server processor 31 determines whether or not there are converted detected object coordinates (or coordinates in the radar coordinate system RCS) that are the same as the converted imaged object coordinates corresponding to the camera ID "2002". As illustrated in FIG. 10, the camera ID "2002" is a value assigned to the object 3. In this case, since the object 3 has not been detected by the monitoring radar 10, converted detected object coordinates (or coordinates in the radar coordinate system RCS) that are the same as the converted imaged object coordinates corresponding to the camera ID "2002" do not exist. That is, in this case, in step StS13, the server processor 31 determines that the imaged object corresponding to the camera ID "2002" is an object that has not been detected by the monitoring radar 10.

When the server processor 31 determines that the fixed camera 20A has imaged an object that has not been detected by monitoring radar 10 (YES in step StS13), the server processor 31 assigns a server ID and a radar ID for the monitoring radar 10 to the imaged object imaged by the fixed camera 20A (the object 3 in table TBL0, see FIG. 10) (step StS14). The server processor 31 sends the imaged object attribute information determined to be YES in step StS13, the server ID, and the radar ID to the monitoring radar 10 (step StS14).

In step StS14, the server processor 31 assigns the server ID "3005" and the radar ID "3005" to the camera ID "2002" (see FIG. 10).

The radar processor 11 newly generates information of a detected object (specifically, an object imaged by the fixed camera 20A and not detected by the monitoring radar 10) using the information sent from the server 30 in step StS14 (step StR17). In the following description, an object imaged by the camera 20 and not detected by the monitoring radar 10 may be referred to as a "detection target object". For example, the radar processor 11 assigns a radar ID to a detection target object and associates attribute information of the detection target object and a radar ID together. The attribute information of the detection target object corresponds to the imaged object attribute information obtained by the fixed camera 20A relating to the imaged object corresponding to the detection target object. In this manner, the monitoring radar 10 can associate together the imaged object attribute information of the object that has not been detected by monitoring radar 10 but has been imaged by fixed camera 20A and the radar ID that enables the monitoring radar 10 to perform tracing processing. In the monitoring system 100, after step StR17, the processing illustrated in FIGS. 8 and 9 is repeated.

When it is determined in step StS13 that the object detected by the monitoring radar 10 has not been imaged by fixed camera 20A (NO in step StS13), the server processor 31 assigns a server ID to the detected object detected by the monitoring radar 10 (objects 2 and 4 in table TBL0, see FIG. 10) (step StS15). After step StS15, the monitoring system 100 repeats the processing in FIGS. 8 and 9.

As illustrated in the table TBL0, at the time of step StS11, the objects to which a radar ID is assigned are the objects 1, 2, 4, and 5, and the objects to which a camera ID is assigned are the objects 1, 3, and 5. Note that the objects 1 and 5 are determined to be YES in step StS11, and the object 3 is determined as YES in step StS13. Thus, in the example illustrated in FIG. 10, the server processor 31 executes the processing of step StS15 on the basis of the converted detected object coordinates of the objects 2 and 4.

That is, the server processor 31 executes the processing of step StS15 using the converted detected object coordinates (or the coordinates in the radar coordinate system RCS) corresponding to the radar ID "1002" and the converted detected object coordinates (or the coordinates in the radar coordinate system RCS) corresponding to the radar ID "1004". As illustrated in FIG. 10, the radar ID "1002" is a value assigned to the object 2. In this case, since the object 2 has not been imaged by the camera 20, converted imaged object coordinates that are the same as the converted detected object coordinates (or the coordinates in the radar coordinate system RCS) corresponding to the radar ID "1002" do not exist. This also applies to the radar ID "1004". That is, in this case, in step StS13, the server processor 31 determines that the detected object corresponding to the radar ID "1002" and the detected object corresponding to the radar ID "1004" are objects that have not been imaged by the camera 20. Then, in step StS15, the server processor 31 assigns the server ID "3002" to the radar ID "1002" and the server ID "3003" to the radar ID "1004" (see FIG. 10).

As a result of the processing in FIGS. 8 and 9, the server processor 31 (or the radar processor 11) displays the radar map RMP1 and the camera image IMG1 on a user terminal such as the monitor 70 on the basis of at least one of the radar position information, the detected object attribute information, the imaging position information, or the imaged object attribute information. In other words, when the detected object and the imaged object are not an identical object, the server processor 31 generates the notification information on the basis of at least one of the radar position information, the detected object attribute information, the imaging position information, or the imaged object attribute information. In other words, when the detected object and the imaged object are not an identical object, the radar processor 11 generates the notification information on the basis of at least one of the radar position information, the detected object attribute information, the imaging position information, or the imaged object attribute information.

Note that the object 6 has not been detected by the monitoring radar 10 and has not been detected by the camera 20. Thus, since the server 30 cannot learn of the presence of the object 6, the server 30 cannot assign a server ID (see FIG. 10).

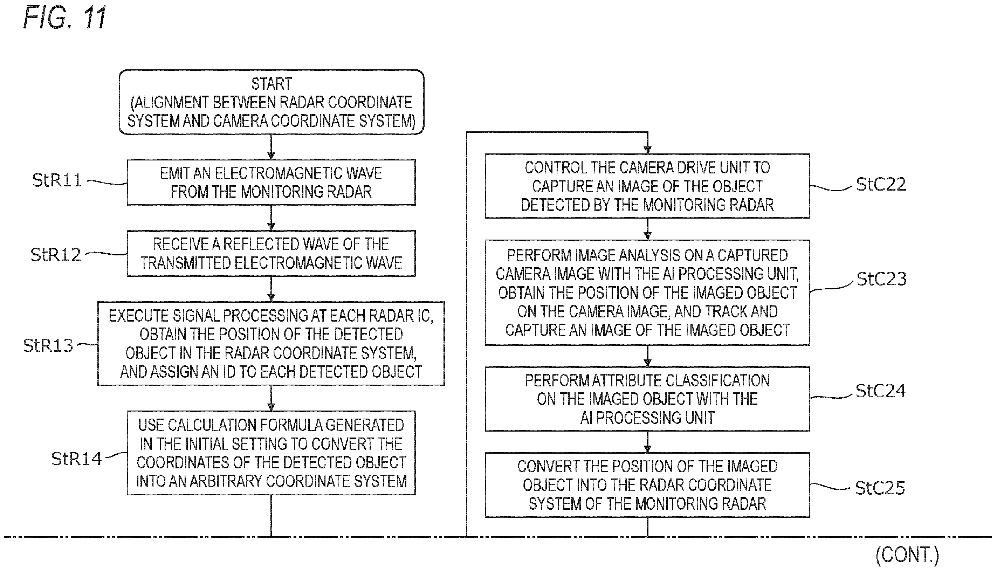

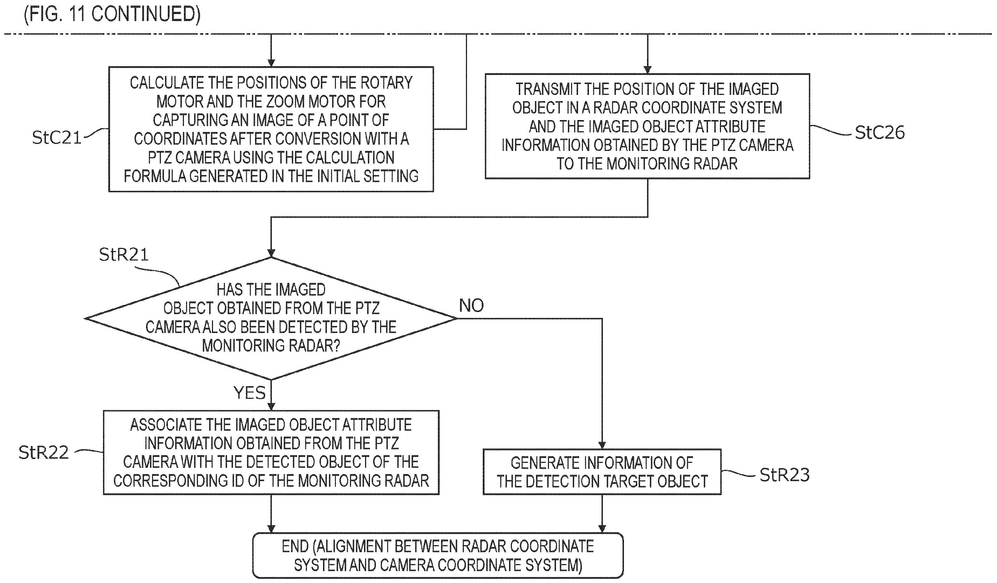

Next, an operation procedure for associating the coordinates in the radar coordinate system indicating the position of the detected object with the coordinates in the camera coordinate system indicating the position of the imaged object in the monitoring system 100 will be described with reference to FIG. 11. FIG. 11 is a flowchart illustrating an example of the operation procedure for alignment between coordinates of the monitoring radar 10 and coordinates of the PTZ camera 20B. The operation procedure of the initial setting performed before executing the processing in FIG. 11 is the same as that of FIG. 7 using the fixed camera 20A. Thus, when starting the processing in FIG. 11, the camera processor 21B executes the same processing as the processing executed by the camera processor 21A in FIG. 7. Thus, in the description of FIG. 11, the reference numeral of the camera processor 21A in the description of FIG. 7 is replaced with the camera processor 21B, and the description is omitted. In the description of FIG. 11, the PTZ camera 20B is used as the camera 20. In addition, in the description of FIG. 11, the same step numbers are given to the same processing as those in the description of FIG. 8, the description is simplified or omitted, and different contents will be described.

The PTZ camera 20B performs pan rotation and/or tilt rotation of the camera lens and performs adjustment such as zoom processing for increasing or decreasing an imaging magnification. Thus, in the description in FIG. 11, the series of processing steps (steps StC21 to StC26) executed by the PTZ camera 20B is executed following on from the series of processing steps (steps StR11 to StR14) executed by the monitoring radar 10.

In the process of step StR14 in FIG. 11, the monitoring radar 10 sends the converted detected object coordinates and the detected object attribute information to the PTZ camera 20B for each detected object assigned with a radar ID (step StR14).

The camera processor 21B calculates the positions of the rotary motor 261 and the zoom motor 262 (step StC21). In step StC21, the camera processor 21B uses the calculation formula generated in step St3 (see FIG. 7) to coordinate-convert the coordinates in the radar coordinate system RCS (which may be the converted detected object coordinates) indicating the position of the detected object sent from the monitoring radar 10 into the coordinates in the camera coordinate system CCS. Specifically, the camera processor 21B calculates the position of the rotary motor 261 for directing the camera imaging direction to a point of coordinates in the camera coordinate system CCS indicating the position of the detected object and the position of the zoom motor 262 for executing zoom processing toward the point of the coordinates in the camera coordinate system CCS indicating the position of the detected object. The camera processor 21B controls the driving of the camera drive unit 26B so as to drive the imaging unit 23B to the position calculated in step StC21 and causes the imaging unit 23B to image the surroundings including the detected object (step StC22). In step StC22, the camera drive unit 26B may be driven so that the imageable area of PTZ camera 20B is imaged. The image (camera image CAP1) captured by the imaging unit 23B in step StC22 is input from the imaging unit 23B to the camera processor 21B.

The camera processor 21B causes the AI processing unit 25B to execute image analysis using the camera image CAP1 of step StC22 as the input. Then, the camera processor 21B obtains the position (coordinates in the image coordinate system ICS) of the imaged object in the camera image CAP1 on the basis of the analysis result of the camera image CAP1 by the AI processing unit 25B (step StC23). An object recognized as an object included in the camera image CAP1 via image analysis performed by the AI processing unit 25B corresponds to the imaged object. The camera processor 21B assigns a camera ID for identifying an imaged object to the object included in the camera image CAP1 (step StC23). The PTZ camera 20B images the imaged object assigned with a camera ID to track the movement path or a lingering state of the object detected by the monitoring radar 10.

Next, the camera processor 21B causes the AI processing unit 25B to perform attribute classification to extract imaged object attribute information. The camera processor 21B associates together the imaged object attribute information obtained as a result of the attribute classification processing executed by the AI processing unit 25B and the position of the imaged object and the camera ID (step StC24).

The camera processor 21B converts the coordinates in the image coordinate system ICS indicating the position of the imaged object assigned with the camera ID into coordinates in the radar coordinate system RCS by using the calculation formula generated in step St3 (see FIG. 7) (step StC25). The camera processor 21B sends the converted imaged object coordinates (coordinates in the radar coordinate system RCS) of step StC25 and the imaged object attribute information to the monitoring radar 10 for each imaged object assigned with a camera ID (step StC26).

On the basis of the signal processing in step StR13, the radar processor 11 determines whether or not the monitoring radar 10 has detected the imaged object corresponding to the camera ID sent from the PTZ camera 20B in step StC26 (step StR21).

When the radar processor 11 determines that the monitoring radar 10 has detected the imaged object captured by the PTZ camera 20B (YES in step StR21), the radar processor 11 executes the processing of step StR22. That is, the radar processor 11 associates together the attribute information obtained by the monitoring radar 10 and the imaged object attribute information corresponding to the camera ID sent from PTZ camera 20B for the detected object assigned with a radar ID (step StR22). The detected object assigned with a radar ID corresponds to an object detected by the monitoring radar 10 among objects present in the first monitoring area AR1. In this manner, the monitoring radar 10 can obtain the detected object attribute information and the imaged object attribute information with respect to an identical object detected by the monitoring radar 10 and imaged by the PTZ camera 20B. After step StR22, the monitoring system 100 repeats the processing in FIG. 11.

On the other hand, in step StR21, when the radar processor 11 determines that the monitoring radar 10 has not detected the imaged object captured by the PTZ camera 20B (NO in step StR21), the radar processor 11 executes the processing of step StR23. That is, the radar processor 11 generates information of a detection target object (specifically, an object imaged by the PTZ camera 20B and not detected by the monitoring radar 10) using the information sent from the PTZ camera 20B in step StC26 (step StR23). For example, the radar processor 11 assigns a new radar ID to the detection target object, and associates together the attribute information of the detection target object (that is, the imaged object attribute information obtained by PTZ camera 20B with respect to the imaged object corresponding to the detection target object) and the radar ID. As described above, the monitoring radar 10 associates together the imaged object attribute information of the object that has not been detected by the monitoring radar 10 but has been imaged by the PTZ camera 20B and the radar ID, and thus the monitoring radar 10 can execute the tracking processing. After step StR23, the monitoring system 100 repeats the processing in FIG. 11.

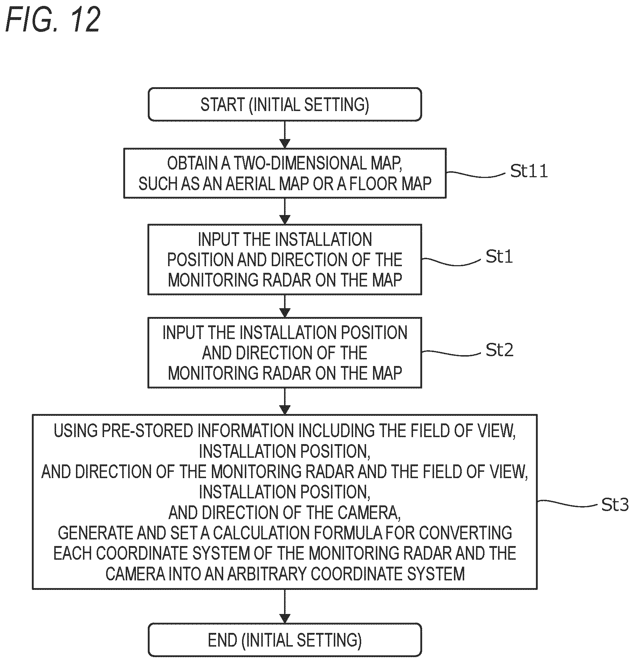

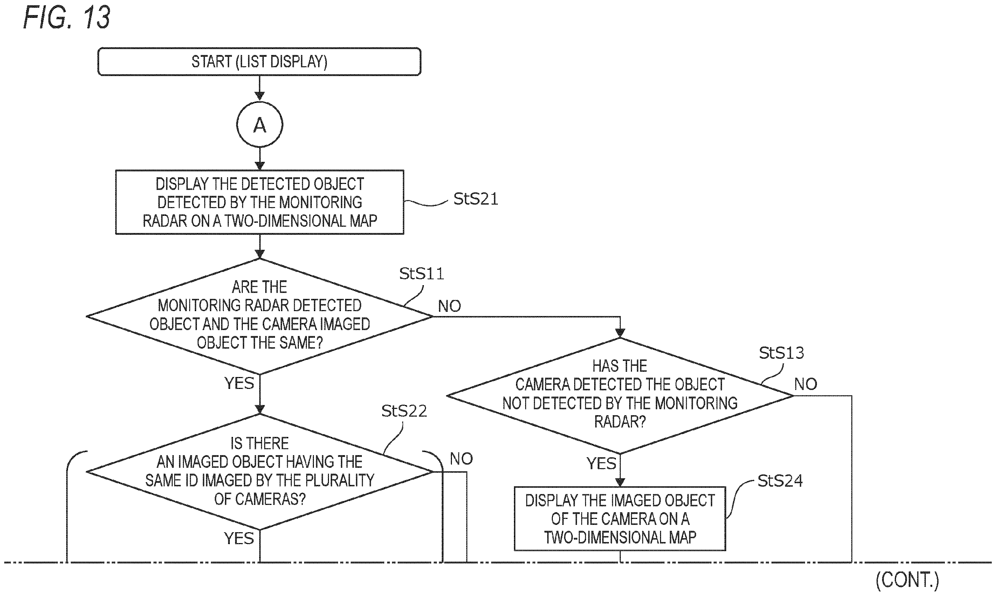

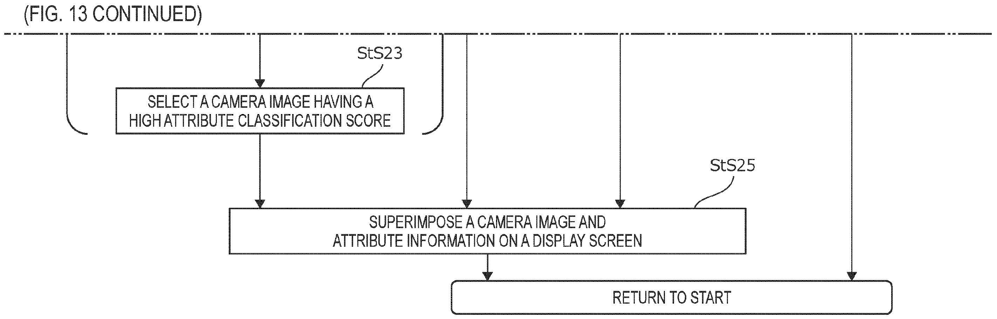

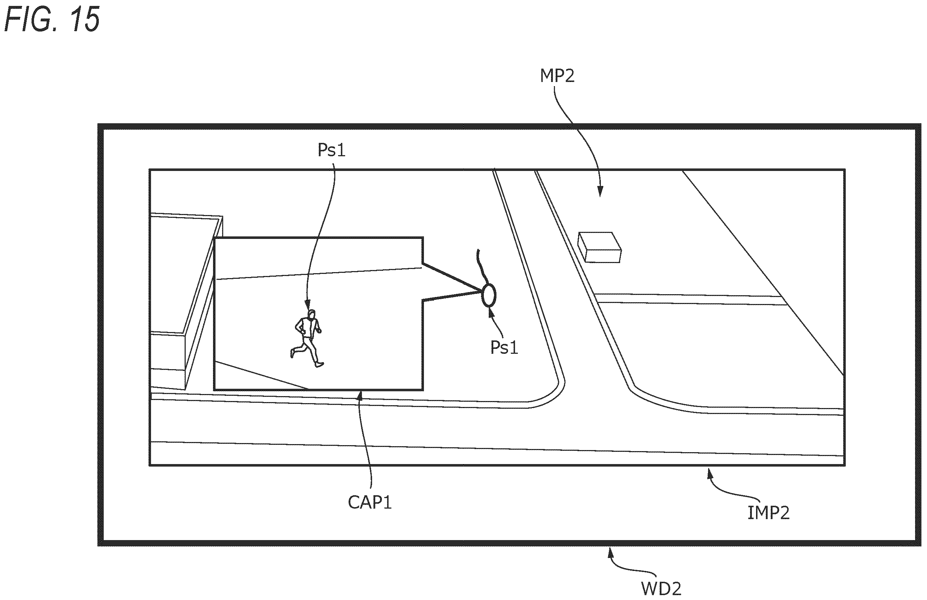

Next, a processing example using the result of associating the coordinates of the detected object in the radar coordinate system with the post-coordinate-converted coordinates of the imaged object in the radar coordinate system in the monitoring system 100 will be described. FIGS. 12 and 13 are flowcharts illustrating an example of the operation procedures of the initial setting for displaying a list of detected objects and imaged objects. FIG. 14 is a diagram illustrating an example of a superimposed screen in which the first monitoring area AR1 and the camera image CAP1 are superimposed on a map MP1. FIG. 15 is a diagram illustrating an example of a superimposed screen in which the camera image CAP1 is superimposed on a map MP2.

Note that in FIG. 12, the same step numbers are given to the same processing as those in FIG. 7, the description is simplified or omitted, and different contents will be described. In FIG. 13, the same step numbers are given to the same processing as those in FIG. 8, the description is simplified or omitted, and different contents will be described. In the description of FIGS. 12 to 15, the camera 20 may be, for example, the fixed camera 20A or the PTZ camera 20B. In the examples described below, the camera 20 is the fixed camera 20A and a plurality of cameras 20 are installed.

With reference to FIG. 12, the operation procedures of the initial setting for displaying a list of detected objects and imaged objects will be described. When the user operates the operation device 60, two-dimensional map data of a place where the monitoring system 100 is installed is input to the server 30 (step St11). The two-dimensional map of the place where the monitoring system 100 is installed corresponds to, for example, an aerial map when the place is outdoors and a floor map of a shopping mall or the like when the place is indoors, but the two-dimensional map is not limited thereto. FIG. 14 illustrates data of an aerial map including the map MP1 as two-dimensional map data of the place where the monitoring system 100 is installed. The processing after step St11 in FIG. 12 is the same as the processing after step St1 in FIG. 7, and thus description will be omitted.

As illustrated in FIG. 13, the monitoring radar 10 executes a series of processing steps (steps StR11 to StR15, see FIG. 8), and the cameras 20 execute a series of processing steps (steps StC11 to StC15, see FIG. 8). Then, the server processor 31 superimposes and displays a marker indicating the detected object on the two-dimensional map input in step St11 (see FIG. 12) (step StS21). In step StS21, the server processor 31 may superimpose a superimposed image IMP1 (see FIG. 14) on the map MP1. After step StS21, the server processor 31 proceeds to step StS11.

When the server processor 31 determines that the detected object and the imaged object are an identical object (YES in step StS11), the server processor 31 determines whether or not an imaged object assigned with the same camera ID is present in the camera images of the plurality of cameras 20 (step StS22). When an imaged object assigned with the same camera ID is not present in the camera images of the plurality of cameras 20 (NO in step StS22), the processing proceeds to step StS25.

On the other hand, when the server processor 31 determines that an imaged object assigned with the same camera ID is present in the camera images of the plurality of cameras 20 (YES in step StS22), the server processor 31 selects, from among the plurality of captured camera images, the camera image CAP1 having a high score in terms of attribute classification (step StS23). After step StS23, the server processor 31 proceeds to step StS25. A camera image having a high attribute classification score corresponds to, for example, an image in which an imaged object such as a person in the camera image is facing the front (that is, toward the camera 20) or an image in which a face portion of the person is clear to such an extent that the area of the face portion is greater than a predetermined number of pixels. In step StS23, the server processor 31 may select one camera image having the highest attribute classification score as the camera image CAP1. It is needless to say that this specific example of the camera image having a high attribute classification score is not limited to the image described above. In this manner, when an identical object is imaged by the plurality of cameras 20, the state of the imaged object can be more accurately grasped.

When the server processor 31 determines that the detected object and the imaged object are not an identical object (NO in step StS11), the server processor 31 executes the processing of step StS13. That is, the server processor 31 determines whether or not an object not detected by the monitoring radar 10 has been imaged by the cameras 20 on the basis of the converted detected object coordinates and the converted imaged object coordinates (step StS13). When it is determined that the object which has not been detected by the monitoring radar 10 has not been imaged by the cameras 20 (NO in step StS13), the server processor 31 ends the processing in FIG. 13.

On the other hand, when the server processor 31 determines that the cameras 20 has imaged the object that has not been detected by the monitoring radar 10 (YES in step StS13), the server processor 31 executes the processing of step StS24. That is, the server processor 31 superimposes and displays a marker (for example, a circular image or the like) indicating the imaged object (for example, the person Ps1) at the position of the imaged object on the two-dimensional map input in step St11 in FIG. 12 (step StS24). After step StS24, the server processor 31 proceeds to step StS25.

The server processor 31 generates the superimposed image IMP1 indicating the camera image CAP1 of the imaged object (for example, the person Ps1) and the attribute information relating to the detected object and/or the imaged object (step StS25). The server 30 generates a superimposed screen WD1 (see FIG. 14) including the superimposed image IMP1 and outputs and displays the superimposed screen WD1 on the monitor 70 or the like.

FIG. 14 is a diagram illustrating the superimposed screen WD1 as an example of notification information. The superimposed screen WD1 includes the map MP1 and the superimposed image IMP1 superimposed on the map MP1. The map MP1 corresponds to a two-dimensional data of a two-dimensional aerial map, a two-dimensional geodetic map, or the like. The superimposed image IMP1 corresponds to, for example, an image indicating the first monitoring area AR1 (the halftone dot area in FIG. 14), an image indicating the second monitoring area AR2 (the diagonal line area in FIG. 14), an image indicating a radar installation position PS0, the camera image CAP1, and the like.

FIG. 14 illustrates the superimposed screen WD1 when the person Ps1 is detected by the monitoring radar 10 and the person Ps1 is imaged by the camera 20. The area size relationship between the first monitoring area AR1 and the second monitoring area AR2 may be reversed, and the shapes of the first monitoring area AR1 and the second monitoring area AR2 are not limited to the shapes illustrated in FIG. 14. As the superimposed image IMP1, the attribute information (detected object attribute information or imaged object attribute information) of the object (for example, the person Ps1) may be displayed together with the camera image CAP1 of the object. In this manner, it is possible to perform notification with high visibility to the user of the terminal (for example, the security guard terminal 50, the monitor 70, and the like) which is the notification destination of the superimposed screen WD1 regarding what kind of characteristic element a person has at which position of the first monitoring area AR1 or the second monitoring area AR2.

FIG. 15 is a diagram illustrating a superimposed screen WD2 as an example of notification information. The superimposed screen WD2 includes the map MP2 and a superimposed image IMP2. The map MP2 corresponds to a three-dimensional map such as a three-dimensional aerial map or a perspective projection view. The superimposed image IMP2 is the camera image CAP1 of the detected object or the like. Note that as the superimposed image IMP2, the attribute information (detected object attribute information or imaged object attribute information) of the object (for example, the person Ps1) may be displayed together with the camera image CAP1 of the detected object. In this manner, it is possible to perform notification with high visibility to the user who looks at the notification destination (for example, the security guard terminal 50 and the monitor 70) where the superimposed screen WD2 is displayed regarding what kind of characteristic element a person has at which position of the first monitoring area AR1 or the second monitoring area AR2.

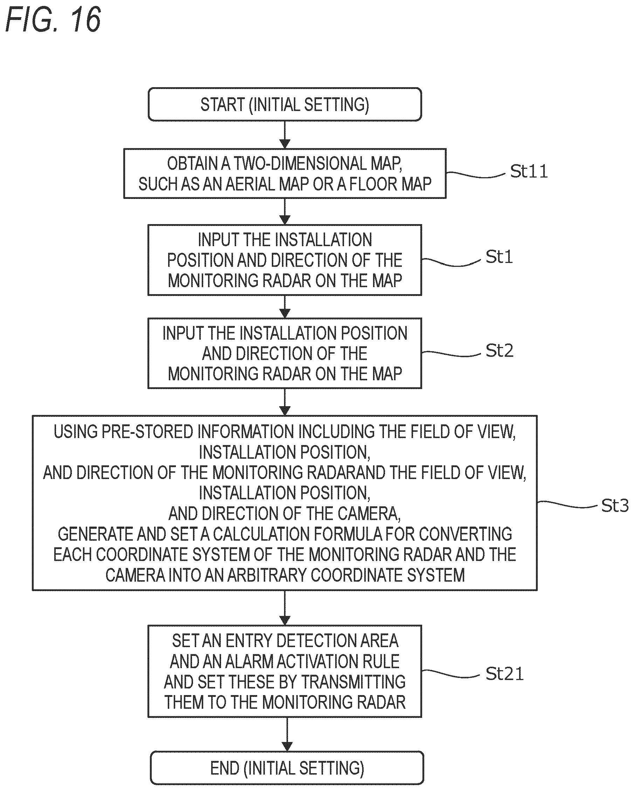

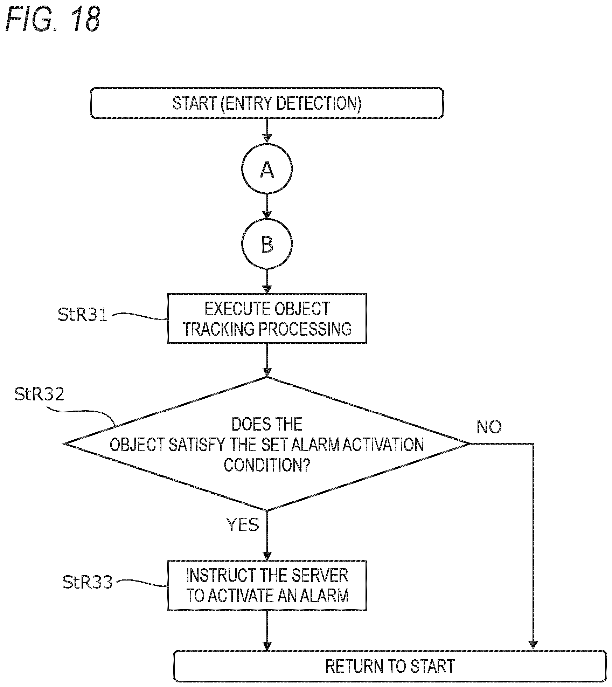

Next, with reference to FIGS. 16, 17, and 18, another processing example using the result of associating the coordinates of the detected object in the radar coordinate system RCS with the post-coordinate-converted coordinates of the imaged object in the radar coordinate system RCS in the monitoring system 100 will be described. FIG. 16 is a flowchart illustrating an example of an operation procedure for performing an initial setting for entry detection with respect to a detected object and an imaged object. FIG. 17 is a diagram illustrating an example of an alarm activation rule. FIG. 18 is a flowchart illustrating the operation procedure for performing entry detection with respect to a detected object and an imaged object. In the description of FIG. 16, the same step numbers are given to the same processing as those in FIG. 7 or FIG. 12, and the description is simplified or omitted. In the description of FIG. 18, the same step numbers are given to the same processing as those in the description of FIG. 8 or FIG. 9, and the description is simplified or omitted. Although a case where the fixed camera 20A is used is described using FIGS. 16 to 18, the PTZ camera 20B may be used as the camera 20.

As illustrated in FIG. 16, after step St3, the server processor 31 receives an input of information indicating a no-entry area AR10 (step St21). As illustrated in FIG. 14, the no-entry area AR10 is an area that can be designated as desired by the user of the monitoring system 100 as an area where object entry is prohibited. The no-entry area AR10 is an area for which an alarm is activated (a notification to a user, a person present in the surroundings of the monitoring system 100, or the like) when an object entry is detected. In addition, the server 30 receives an input of information indicating an alarm activation rule TBL2 (see FIG. 17) designated by an operation performed by the user using the operation device 60 (step St21). The server 30 sends information indicating the no-entry area and information of the alarm activation rule TBL2 to the monitoring radar 10 (step St21). The monitoring radar 10 stores and sets the information indicating the no-entry area and the information of the alarm activation rule TBL2 sent from the server 30 in the memory 12 (step St21).

The user of the monitoring system 100 can designate the no-entry area AR10 by operating the operation device 60. For example, a shape other than a rectangle may be designated as the no-entry area AR10. For example, as an example of the no-entry area AR10, a no-entry line BNL1 for detecting the presence or absence of an object at a position a predetermined distance away from a reference position (in FIG. 14, the installation position of the fixed camera 20A) may be designated (see FIG. 14). In addition, the user of the monitoring system 100 can designate an arbitrary area from among the areas included in first monitoring area AR1 and second monitoring area AR2 as the no-entry area AR10.

As illustrated in FIG. 17, the alarm activation rule TBL2 includes an item L11 indicating the setting place and type (line or area) of the no-entry area AR10, an item L12 indicating a movement condition of the object, an item L13 indicating the type of the object, and an item L14 indicating the attribute of the object. The item L13 and the item L14 may include information that can be identified only by the monitoring radar 10 or information that can be identified only by the camera 20.

No. 1 of the alarm activation rule TBL2 indicates an example in which an alarm is activated when an object crosses the no-entry line BNL1 (line cross), the object is a person, and the attribute of the object is red. The attribute of the object being red corresponds to, for example, a case where the object is a person and the person is wearing red clothing, but it is not limited to these examples. The alarm activation rule TBL2 for a no-entry area can be edited by the user using the operation device 60, and the edited alarm activation rule may be stored in the memory 32.

As illustrated in FIG. 18, the monitoring radar 10 executes a series of processing steps (steps StR11 to StR15, see FIG. 8), and the camera 20 executes a series of processing steps (steps StC11 to StC15, see FIG. 8). Next, the server 30 executes a series of processing steps (steps StS11 to StS15, see FIG. 9), and the monitoring radar 10 executes a series of processing steps (steps StR16 to StR17, see FIG. 9). The series of processing steps illustrated in FIG. 18 may be executed mainly by the server processor 31 in the server 30.

The radar processor 11 executes tracking processing to track the object using the result of the detection processing executed by the detection unit 13 (step StR31). The radar processor 11 determines whether or not the attribute information (the detected object attribute information and/or the imaged object attribute information) relating to the object to be tracked corresponds to the alarm activation rule TBL2 (step StR32). When it is determined that the attribute information relating to the object to be tracked (that is, the detected object attribute information and/or the imaged object attribute information relating to the object) does not correspond to the alarm activation rule TBL2 (NO in Step StR32), the processing of the monitoring system 100 illustrated in FIG. 18 ends.

On the other hand, when the radar processor 11 determines that the attribute information (the detected object attribute information and/or the imaged object attribute information) relating to the object to be tracked corresponds to the alarm activation rule TBL2 (YES in step StR32), the radar processor 11 executes the processing of step StR33. That is, the radar processor 11 generates notification information for activating an alarm and sends the notification information to the server 30 (step StR33). The server processor 31 notifies a predetermined notification destination, such as a user terminal, of the alarm activation. Here, the notification information for alarm activation includes, for example, at least the attribute information of an object to be tracked (the detected object attribute information and/or the imaged object attribute information), a position of the object to be tracked (for example, a position in the radar coordinate system RCS), and information such as the current time. In addition, the server processor 31 may generate control information for moving the security robot 40 and information for issuing a threat, a warning, or a similar action targeting the object, and may notify the security robot 40 of this information as an alarm.

As described above, the monitoring system 100 of the present disclosure notifies a user terminal or the like of notification information including not only the presence or absence of an object but also various pieces of information relating to the object obtained by the monitoring radar 10 and/or the camera 20. Thus, the monitoring system 100 can improve the detection accuracy of an object present in the monitoring area.

In addition, since the monitoring system 100 can collect various kinds of information relating to the object detected by the monitoring radar 10, it is possible to improve the detection accuracy of the object present in the monitoring area (for example, the first monitoring area AR1 and the second monitoring area AR2).

In addition, the monitoring system 100 can store an alarm activation rule for an alarm indicating the presence of an object that has entered a no-entry area and can accurately perform notification of the entry by the object by executing entry detection processing according to the alarm activation rule.

In addition, the monitoring system 100 can accurately detect only objects that perform a designated abnormal behavior in an arbitrary designated area.

In addition, the monitoring system 100 can accurately detect only objects corresponding to a designated condition as attribute information of the object.

In addition, by displaying the position of the object on the map MP1 in a superimposed manner, the monitoring system 100 makes it easier for a user viewing the map MP1 to grasp the position of the object.

In addition, since the monitoring system 100 can display not only the position of the object on the map MP1 but can also display the camera image of when the object was imaged and the attribute information of the object together on the map MP1, it is possible for the user to grasp detailed information of the object.

In addition, the monitoring system 100 makes it easy for the user to visually comprehend what kind of characteristic element a person has at what position.

In addition, by comprehensively using the monitoring radar 10 and the plurality of cameras 20, the monitoring system 100 can not only further improve the detection accuracy of the object but also extract more detailed information such as attribute information of the object.

In addition, the monitoring system 100 displays a camera image more suitable for extraction of attribute information of the object and the attribute information obtained from the camera image, and thus can accurately present highly reliable information regarding the object to the user.

In addition, the monitoring system 100 can output highly reliable information regarding the object by using any one of a score indicating the accuracy of the attribute information included in the attribute information, the size of the object, or both the score and the size of the object.

Although various embodiments have been described above with reference to the drawings, it goes without saying that the present disclosure is not limited to such examples. A person skilled in the art can conceive of various changes, modifications, substitutions, additions, deletions, and equivalents within the scope described in the claims, and it should be understood that these also naturally fall within the technical scope of the present disclosure. The components in the various embodiments described above may be combined as desired to an extent that does not depart from the scope of the invention.

This application is based on Japanese Patent Application No. 2022-052014 filed on March 28, 2022, the contents of which are incorporated herein by reference.

Industrial Applicability

The present disclosure is useful as a monitoring system and a monitoring method for improving the detection accuracy of an object present in a monitoring area.

Reference Signs List

    10 Monitoring radar
    11 Radar processor
    12, 22A, 22B, 32 Memory
    13 Detection unit
    14, 24A, 24B, 34 Communication unit
    15, 25A, 25B AI processing unit
    20 Camera
    20A Fixed camera
    20B PTZ camera
    21A, 21B Camera processor
    23A, 23B Imaging unit
    26B Camera drive unit
    30 Server
    31 Server processor
    33 Database
    40 Security robot
    50 Security guard terminal
    60 Operation device
    70 Monitor
    100 Monitoring system
    131, 13n Radar IC
    151, 251A, 251B AI calculation processing unit
    152, 252A, 252B Learning model memory
    261 Rotary motor
    262 Zoom motor
    An Antenna unit
    ARx1, ARxn Reception antenna unit
    ATx1, ATxn Transmission antenna unit
    NW Network

**Claims**

1.  A monitoring system comprising:

    a radar; and
    at least one camera,
    the radar includes

        an antenna unit configured to transmit an electromagnetic wave to a first monitoring area and receive a reflected wave of the electromagnetic wave,
        a detection unit configured to execute detection processing to detect a presence or absence of an object in the first monitoring area on a basis of the reflected wave, and
        a control unit configured to generate detected object attribute information indicating an attribute of a detected object detected by the detection unit on a basis of a result of the detection processing and generate radar position information indicating a position of the detected object on a basis of first installation information including an antenna installation position and an antenna direction and information of an antenna field of view; and

the at least one camera includes

        an imaging unit configured to image a second monitoring area at least partially overlapping the first monitoring area, and
        a processing unit configured to obtain imaging position information indicating a position of an imaged object included in a captured image of the second monitoring area on a basis of second installation information including an installation position of the imaging unit and an imaging direction of the imaging unit and information of a field of view of the imaging unit and obtain imaged object attribute information indicating an attribute of the imaged object on a basis of the captured image, wherein

the monitoring system includes

        a determination unit that executes determination processing to determine whether or not the detected object and the imaged object are an identical object on a basis of the radar position information and the imaging position information, and
        a notification control unit that causes a notification unit that executes notification processing to notify a user of notification information, and

    in a case where the detected object and the imaged object are an identical object, the notification information is information in which a first identifier for identifying the detected object, the detected object attribute information, the captured image, and the imaged object attribute information at least are associated together, and in a case where the detected object and the imaged object are not an identical object, the notification information is information based on at least one of the radar position information, the detected object attribute information, the imaging position information, or the imaged object attribute information.

2.  The monitoring system according to claim 1, wherein

    the camera includes

a motor that adjusts the imaging direction, and
a motor control unit that drives the motor,

the control unit drives the motor on a basis of a relationship between a position of the motor and an imaging range of the imaging unit in real space and the second installation information so that the imaging unit images an object, among the detected objects, included in the second monitoring area, and
in a case where the detected object and the imaged object are an identical object, the notification information is information in which a monitoring position captured image obtained by the imaging unit imaging the object included in the second monitoring area and imaged object attribute information of an object included in the monitoring position captured image are associated with the first identifier corresponding to the detected object.

3. The monitoring system according to claim 1 or 2, further comprising:

a tracking processing unit that executes tracking processing to track an object on a basis of a result of the detection processing, wherein
the determination unit executes abnormal determination processing to determine whether or not the detected object or the imaged object is an object for which an alarm is to be activated on a basis of an abnormal determination condition including at least one of the imaged object attribute information or a movement state of the detected object or the imaged object, and
in a case where the imaged object attribute information corresponding to an object targeted for the tracking processing or a movement state of the detected object targeted for the tracking processing or the imaged object targeted for the tracking processing is determined to correspond to the abnormal determination condition, the notification control unit activates an alarm as the notification processing.

4. The monitoring system according to claim 3, wherein the abnormal determination condition is at least one of entry of the detected object or the imaged object into a no-entry area where entry by an object is prohibited, the detected object or the imaged object lingering in the no-entry area, a specific behavior pattern relating to the detected object or the imaged object, an item left by the detected object or the imaged object, or an item taken by the detected object or the imaged object.

5. The monitoring system according to claim 3 or 4, wherein
the alarm is a threat or a warning targeting an object or information for causing a drone or robot to issue the threat or the warning.

6. The monitoring system according to any one of claims 1 to 5, wherein
the imaged object attribute information is information including at least one of type, gender, age bracket, height, color of clothes, vehicle type, vehicle color, a score indicating accuracy of the attribute, or movement speed of the imaged object.

7. The monitoring system according to any one of claims 1 to 6, further comprising:

an information processing apparatus including the notification unit, wherein
the notification unit superimposes and displays a position of the detected object and a position of the imaged object on a map image including the first monitoring area and the second monitoring area as the notification processing.

8. The monitoring system according to claim 7, wherein
in a case where the notification information includes the imaged object attribute information, the information processing apparatus superimposes and displays the captured image and the imaged object attribute information on the map image.

9. The monitoring system according to claim 7 or 8, wherein
the map image is a two-dimensional image or a three-dimensional image relating to an area including the first monitoring area and the second monitoring area.

10. The monitoring system according to any one of claims 1 to 9, wherein

the monitoring system includes a plurality of the cameras, and
in a case where, in the determination processing, there are a plurality of captured images of the imaged object determined to be identical to the detected object, the notification information is information in which the first identifier corresponding to the detected object, a plurality of captured images relating to the imaged object determined to be identical to the detected object, and imaged object attribute information relating to the imaged object determined to be identical to the detected object are associated together.

11. The monitoring system according to claim 10, wherein
the notification information is information including a captured image corresponding to a predetermined criterion relating to the imaged object determined to be identical to the detected object and the imaged object attribute information.

12. The monitoring system according to claim 11, wherein

the predetermined criterion is set on a basis of at least one of a score indicating accuracy of the attribute or a size of an object.

13. A monitoring method comprising:

transmitting an electromagnetic wave to a first monitoring area and receiving a reflected wave of the electromagnetic wave;

executing detection processing to detect a presence or absence of an object in the first monitoring area on a basis of the reflected wave;

generating detected object attribute information indicating an attribute of a detected object detected by a detection unit that executes the detection processing on a basis of a result of the detection processing and generating radar position information indicating a position of the detected object on a basis of first installation information including an antenna installation position and an antenna direction and information of an antenna field of view;

imaging, with an imaging unit, a second monitoring area at least partially overlapping the first monitoring area;

obtaining imaging position information indicating a position of an imaged object included in a captured image of the second monitoring area on a basis of second installation information including an installation position of the imaging unit and an imaging direction of the imaging unit and information of a field of view of the imaging unit and obtaining imaged object attribute information indicating an attribute of the imaged object on a basis of the captured image;

executing determination processing to determine whether or not the detected object and the imaged object are an identical object on a basis of the radar position information and the imaging position information; and

causing a notification unit that executes notification processing to notify a user of notification information, wherein

in a case where the detected object and the imaged object are an identical object, the notification information is information in which a first identifier for identifying the detected object, the detected object attribute information, the captured image, and the imaged object attribute information at least are associated together, and

in a case where the detected object and the imaged object are not an identical object, the notification information is information based on at least one of the radar position information, the detected object attribute information, the imaging position information, or the imaged object attribute information.

FIG. 1

FIG. 2

MONITORING RADAR 10

NW

COMMUNICATION UNIT 14

RADAR PROCESSOR 11

AI PROCESSING UNIT 15

AI CALCULATION PROCESSING UNIT 151

LEARNING MODEL MEMORY 152

MEMORY 12

RADAR IC 131

RADAR IC 13n

13

ATx1
ARx1
ATxn
ARxn
An

SERVER 30

EP 4 503 599 A1

FIG. 3

EP 4 503 599 A1

FIG. 4

EP 4 503 599 A1

FIG. 5

## FIG. 6A

$$\begin{bmatrix} X_c \\ Y_c \\ Z_c \end{bmatrix} = \begin{bmatrix} r_{11} & r_{12} & r_{13} \\ r_{21} & r_{22} & r_{23} \\ r_{31} & r_{32} & r_{33} \end{bmatrix} \begin{bmatrix} X_w \\ Y_w \\ Z_w \end{bmatrix} + \begin{bmatrix} t_1 \\ t_2 \\ t_3 \end{bmatrix}$$

CAMERA  EXTERNAL  RADAR  EXTERNAL
COORDINATES  PARAMETERS  COORDINATES  PARAMETERS

## FIG. 6B

$$s \begin{bmatrix} u \\ v \\ 1 \end{bmatrix} = \begin{bmatrix} f_x & 0 & c_x \\ 0 & f_y & c_y \\ 0 & 0 & 1 \end{bmatrix} \begin{bmatrix} X_c \\ Y_c \\ Z_c \end{bmatrix}$$

IMAGE  INTERNAL  CAMERA
COORDINATES  PARAMETERS  COORDINATES

*FIG. 7*

```
        ┌─────────────────────────────────┐
        │      START (INITIAL SETTING)     │
        └─────────────────────────────────┘
                        │
                        ▼
        ┌─────────────────────────────────┐
        │      INPUT THE INSTALLATION       │
        │  POSITION AND DIRECTION OF THE    │──── St1
        │   MONITORING RADAR ON THE MAP     │
        └─────────────────────────────────┘
                        │
                        ▼
        ┌─────────────────────────────────┐
        │  INPUT THE INSTALLATION POSITION  │
        │       AND DIRECTION OF THE        │──── St2
        │       CAMERA ON THE MAP           │
        └─────────────────────────────────┘
                        │
                        ▼
┌───────────────────────────────────────────────────────┐
│ USING PRE-STORED INFORMATION INCLUDING THE FIELD OF VIEW,│
│               INSTALLATION POSITION,                    │
│      AND DIRECTION OF THE MONITORING RADAR AND          │
│        THE FIELD OF VIEW/IMAGEABLE RANGE,               │──── St3
│               INSTALLATION POSITION,                    │
│          AND DIRECTION OF THE CAMERA,                   │
│   GENERATE AND SET A CALCULATION FORMULA FOR CONVERTING  │
│  EACH COORDINATE SYSTEM OF THE MONITORING RADAR AND THE  │
│      CAMERA INTO AN ARBITRARY COORDINATE SYSTEM         │
└───────────────────────────────────────────────────────┘
                        │
                        ▼
        ┌─────────────────────────────────┐
        │       END (INITIAL SETTING)      │
        └─────────────────────────────────┘
```

## FIG. 8

START (ALIGNMENT BETWEEN RADAR COORDINATE SYSTEM AND CAMERA COORDINATE SYSTEM)

StR11 — EMIT AN ELECTROMAGNETIC WAVE FROM THE MONITORING RADAR

StR12 — RECEIVE A REFLECTED WAVE OF THE TRANSMITTED ELECTROMAGNETIC WAVE

StR13 — EXECUTE SIGNAL PROCESSING AT EACH RADAR IC, OBTAIN THE POSITION OF THE DETECTED OBJECT IN THE RADAR COORDINATE SYSTEM, ASSIGN AN ID TO THE DETECTED OBJECT, AND ASSOCIATE TOGETHER THE POSITION (COORDINATES) AND AN ATTRIBUTE SUCH AS RELATIVE VELOCITY

StR14 — USE CALCULATION FORMULA SET IN THE INITIAL SETTING TO CONVERT THE COORDINATES OF THE DETECTED OBJECT INTO AN ARBITRARY COORDINATE SYSTEM

StC11 — CAPTURE IMAGE WITH THE CAMERA

StC12 — PERFORM IMAGE ANALYSIS ON A CAPTURED CAMERA IMAGE WITH THE AI PROCESSING UNIT, OBTAIN THE POSITION OF THE IMAGED OBJECT ON THE CAMERA IMAGE, AND ASSIGN AN ID TO THE IMAGED OBJECT

StC13 — PERFORM ATTRIBUTE CLASSIFICATION ON THE IMAGED OBJECT WITH THE AI PROCESSING UNIT AND ASSOCIATE THE ATTRIBUTE WITH AN ID

StC14 — USE CALCULATION FORMULA SET IN THE INITIAL SETTING TO CONVERT THE COORDINATES OF THE IMAGED OBJECT INTO AN ARBITRARY COORDINATE SYSTEM

A

(CONT.)

(FIG. 8 CONTINUED)

StR15 — TRANSMIT THE POSITION OF EACH ID AFTER COORDINATE SYSTEM CONVERSION AND THE DETECTED OBJECT ATTRIBUTE INFORMATION TO THE SERVER

TRANSMIT THE POSITION OF EACH ID AFTER COORDINATE SYSTEM CONVERSION AND THE IMAGED OBJECT ATTRIBUTE INFORMATION TO THE SERVER — StC15

To StS11

EP 4 503 599 A1

# FIG. 9

FROM StR15 AND StC15

**StS11** ARE THE MONITORING RADAR DETECTED OBJECT AND THE CAMERA IMAGED OBJECT THE SAME? — NO

YES

**StS12** ASSIGN A SERVER ID TO THE DETECTED OBJECT AND TRANSMIT THE IMAGED OBJECT ATTRIBUTE INFORMATION OF THE CORRESPONDING ID OBTAINED BY THE CAMERA TO THE MONITORING RADAR

**StR16** ASSOCIATE THE IMAGED OBJECT ATTRIBUTE INFORMATION OBTAINED FROM THE CAMERA WITH THE DETECTED OBJECT OF THE CORRESPONDING ID OF THE MONITORING RADAR

**StS13** HAS THE CAMERA DETECTED THE OBJECT NOT DETECTED BY THE MONITORING RADAR? — NO

YES

**StS14** ASSIGN A NEW ID FOR THE SERVER ID MONITORING RADAR TO THE CAMERA IMAGED OBJECT AND TRANSMIT THE IMAGED OBJECT ATTRIBUTE INFORMATION OF THE CORRESPONDING ID OBTAINED BY THE CAMERA TO THE MONITORING RADAR

**StR17** GENERATE INFORMATION OF THE DETECTION TARGET OBJECT

**StS15** ASSIGN A SERVER ID TO THE DETECTED OBJECT

B

END (ALIGNMENT BETWEEN RADAR COORDINATE SYSTEM AND CAMERA COORDINATE SYSTEM)

EP 4 503 599 A1

## FIG. 10

• BEFORE ID MERGE — TBL0

| OBJECT | MONITORING RADAR | CAMERA | DETERMINED SAME AT SERVER |
|---|---|---|---|
| 1 | 1001 | 2001 | Same |
| 2 | 1002 | — | Not same |
| 3 | — | 2002 | Not same |
| 4 | 1003 | — | Not same |
| 5 | 1004 | 2003 | Same |
| 6 | — | — | — |

• AFTER ID MERGE — TBL1

| OBJECT | SERVER | MONITORING RADAR | ATTRIBUTE TRANSMISSION FROM CAMERA | CAMERA |
|---|---|---|---|---|
| 1 | 3001 | 1001 | Yes | 2001 |
| 2 | 3002 | 1002 | No | — |
| 3 | 3005 | 3005 | Yes | 2002 |
| 4 | 3003 | 1003 | No | — |
| 5 | 3004 | 1004 | Yes | 2003 |
| 6 | — | — | — | — |

## FIG. 11

```
          ┌─────────────────────────────────────┐
          │              START                   │
          │ (ALIGNMENT BETWEEN RADAR COORDINATE  │
          │ SYSTEM AND CAMERA COORDINATE SYSTEM) │
          └─────────────────────────────────────┘
                          │
StR11 ──┐  ┌─────────────────────────────────────┐         ┌─────────────────────────────────────┐  ┌── StC22
        │  │    EMIT AN ELECTROMAGNETIC WAVE      │         │    CONTROL THE CAMERA DRIVE UNIT TO   │
           │    FROM THE MONITORING RADAR         │         │    CAPTURE AN IMAGE OF THE OBJECT     │
           └─────────────────────────────────────┘         │    DETECTED BY THE MONITORING RADAR   │
                          │                                 └─────────────────────────────────────┘
StR12 ──┐  ┌─────────────────────────────────────┐         ┌─────────────────────────────────────┐  ┌── StC23
        │  │    RECEIVE A REFLECTED WAVE OF THE   │         │ PERFORM IMAGE ANALYSIS ON A CAPTURED │
           │    TRANSMITTED ELECTROMAGNETIC WAVE  │         │ CAMERA IMAGE WITH THE AI PROCESSING  │
           └─────────────────────────────────────┘         │ UNIT, OBTAIN THE POSITION OF THE     │
                          │                                 │ IMAGED OBJECT ON THE CAMERA IMAGE,   │
StR13 ──┐  ┌─────────────────────────────────────┐         │ AND TRACK AND CAPTURE AN IMAGE OF    │
        │  │ EXECUTE SIGNAL PROCESSING AT EACH    │         │ THE IMAGED OBJECT                    │
           │ RADAR IC, OBTAIN THE POSITION OF     │         └─────────────────────────────────────┘
           │ THE DETECTED OBJECT IN THE RADAR     │                        │
           │ COORDINATE SYSTEM, AND ASSIGN AN ID  │         ┌─────────────────────────────────────┐  ┌── StC24
           │ TO EACH DETECTED OBJECT              │         │ PERFORM ATTRIBUTE CLASSIFICATION     │
           └─────────────────────────────────────┘         │ ON THE IMAGED OBJECT WITH THE        │
                          │                                 │ AI PROCESSING UNIT                   │
StR14 ──┐  ┌─────────────────────────────────────┐         └─────────────────────────────────────┘
        │  │ USE CALCULATION FORMULA GENERATED    │                        │
           │ IN THE INITIAL SETTING TO CONVERT    │         ┌─────────────────────────────────────┐  ┌── StC25
           │ THE COORDINATES OF THE DETECTED      │         │ CONVERT THE POSITION OF THE IMAGED   │
           │ OBJECT INTO AN ARBITRARY COORDINATE  │         │ OBJECT INTO THE RADAR COORDINATE     │
           │ SYSTEM                               │         │ SYSTEM OF THE MONITORING RADAR       │
           └─────────────────────────────────────┘         └─────────────────────────────────────┘
```

(CONT.)

EP 4 503 599 A1

(FIG. 11 CONTINUED)

StC21 — CALCULATE THE POSITIONS OF THE ROTARY MOTOR AND THE ZOOM MOTOR FOR CAPTURING AN IMAGE OF A POINT OF COORDINATES AFTER CONVERSION WITH A PTZ CAMERA USING THE CALCULATION FORMULA GENERATED IN THE INITIAL SETTING

TRANSMIT THE POSITION OF THE IMAGED OBJECT IN A RADAR COORDINATE SYSTEM AND THE IMAGED OBJECT ATTRIBUTE INFORMATION OBTAINED BY THE PTZ CAMERA TO THE MONITORING RADAR — StC26

StR21 — HAS THE IMAGED OBJECT OBTAINED FROM THE PTZ CAMERA ALSO BEEN DETECTED BY THE MONITORING RADAR?

NO

YES

StR22 — ASSOCIATE THE IMAGED OBJECT ATTRIBUTE INFORMATION OBTAINED FROM THE PTZ CAMERA WITH THE DETECTED OBJECT OF THE CORRESPONDING ID OF THE MONITORING RADAR

GENERATE INFORMATION OF THE DETECTION TARGET OBJECT — StR23

END (ALIGNMENT BETWEEN RADAR COORDINATE SYSTEM AND CAMERA COORDINATE SYSTEM)

## FIG. 12

```
            START (INITIAL SETTING)

        OBTAIN A TWO-DIMENSIONAL MAP,
    SUCH AS AN AERIAL MAP OR A FLOOR MAP          — St11

           INPUT THE INSTALLATION
      POSITION AND DIRECTION OF THE               — St1
       MONITORING RADAR ON THE MAP

        INPUT THE INSTALLATION POSITION
            AND DIRECTION OF THE                  — St2
        MONITORING RADAR ON THE MAP

  USING PRE-STORED INFORMATION INCLUDING THE FIELD OF VIEW,
                INSTALLATION POSITION,
  AND DIRECTION OF THE MONITORING RADAR AND THE FIELD OF VIEW,
                INSTALLATION POSITION,
            AND DIRECTION OF THE CAMERA,          — St3
  GENERATE AND SET A CALCULATION FORMULA FOR CONVERTING
  EACH COORDINATE SYSTEM OF THE MONITORING RADAR AND THE
       CAMERA INTO AN ARBITRARY COORDINATE SYSTEM

            END (INITIAL SETTING)
```

## FIG. 13

```
            START (LIST DISPLAY)

                    ( A )

        DISPLAY THE DETECTED OBJECT
        DETECTED BY THE MONITORING        — StS21
        RADAR ON A TWO-DIMENSIONAL MAP

              ARE THE
        MONITORING RADAR DETECTED      StS11
        OBJECT AND THE CAMERA IMAGED        NO
        OBJECT THE SAME?

              YES

              IS THERE                StS22
        AN IMAGED OBJECT HAVING THE         NO
        SAME ID IMAGED BY THE PLURALITY
        OF CAMERAS?

              YES

              HAS THE                      StS13
        CAMERA DETECTED THE OBJECT          NO
        NOT DETECTED BY THE MONITORING
        RADAR?

              YES

        DISPLAY THE IMAGED OBJECT     StS24
        OF THE CAMERA ON A
        TWO-DIMENSIONAL MAP

                                        (CONT.)
```

EP 4 503 599 A1

(FIG. 13 CONTINUED)

StS23

SELECT A CAMERA IMAGE HAVING A
HIGH ATTRIBUTE CLASSIFICATION SCORE

StS25

SUPERIMPOSE A CAMERA IMAGE AND
ATTRIBUTE INFORMATION ON A DISPLAY SCREEN

RETURN TO START

FIG. 14

EP 4 503 599 A1

FIG. 15

## FIG. 16

START (INITIAL SETTING)

OBTAIN A TWO-DIMENSIONAL MAP,
SUCH AS AN AERIAL MAP OR A FLOOR MAP — St11

INPUT THE INSTALLATION
POSITION AND DIRECTION OF THE
MONITORING RADAR ON THE MAP — St1

INPUT THE INSTALLATION POSITION
AND DIRECTION OF THE
MONITORING RADAR ON THE MAP — St2

USING PRE-STORED INFORMATION INCLUDING THE FIELD OF VIEW,
INSTALLATION POSITION,
AND DIRECTION OF THE MONITORING RADAR AND THE FIELD OF VIEW,
INSTALLATION POSITION,
AND DIRECTION OF THE CAMERA,
GENERATE AND SET A CALCULATION FORMULA FOR CONVERTING
EACH COORDINATE SYSTEM OF THE MONITORING RADAR AND THE
CAMERA INTO AN ARBITRARY COORDINATE SYSTEM — St3

SET AN ENTRY DETECTION AREA
AND AN ALARM ACTIVATION RULE
AND SET THESE BY TRANSMITTING
THEM TO THE MONITORING RADAR — St21

END (INITIAL SETTING)

*FIG. 17*

| No. | ENTRY DETECTION AREA LINE / AREA | MOVEMENT CONDITION OF DETECTED OBJECT | TYPE OF DETECTED OBJECT | ATTRIBUTE (EXAMPLE: COLOR OF CLOTHES) |
|---|---|---|---|---|
| 1 | Line 1 | Line cross | Person | Red |
| 2 | Area 2 | Entry | Person | Red |
| 3 | Area 3 | Lingering | Person | White |
| 4 | Area 4 | Entry | Vehicle | Red |
| 5 | Line 5 | Line cross | Animal | — |

*FIG. 18*

START (ENTRY DETECTION)

A

B

StR31 — EXECUTE OBJECT TRACKING PROCESSING

StR32 — DOES THE OBJECT SATISFY THE SET ALARM ACTIVATION CONDITION? — NO

YES

StR33 — INSTRUCT THE SERVER TO ACTIVATE AN ALARM

RETURN TO START

## INTERNATIONAL SEARCH REPORT

| International application No. |
| --- |
| **PCT/JP2023/006794** |

### A. CLASSIFICATION OF SUBJECT MATTER

*H04N 7/18*(2006.01)i; *G01S 13/86*(2006.01)i; *G06T 7/70*(2017.01)i; *G06V 20/52*(2022.01)i; *G08B 13/181*(2006.01)i; *G08B 13/196*(2006.01)i; *G08B 15/00*(2006.01)i; *G08B 25/00*(2006.01)i
FI:  H04N7/18 D; G01S13/86; G06T7/70 A; G06V20/52; G08B13/181; G08B13/196; G08B15/00; G08B25/00 510M; H04N7/18 G

According to International Patent Classification (IPC) or to both national classification and IPC

### B. FIELDS SEARCHED

Minimum documentation searched (classification system followed by classification symbols)

H04N7/18; G01S13/00; G06T7/00; G06V20/00; G08B13/00-31/00;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2021-196322 A (TOYOTA MOTOR CORP) 27 December 2021 (2021-12-27) paragraphs [0009]-[0033], fig. 1-3 | 1-13 |
| A | JP 2014-194686 A (DENSO CORP) 09 October 2014 (2014-10-09) paragraphs [0024]-[0076], fig. 1-16 | 1-13 |
| A | JP 2014-169872 A (HITACHI LTD) 18 September 2014 (2014-09-18) entire text, all drawings | 1-13 |
| A | JP 2021-140764 A (FUJITSU LTD) 16 September 2021 (2021-09-16) entire text, all drawings | 1-13 |
| A | JP 2017-181450 A (DENSO CORP) 05 October 2017 (2017-10-05) paragraphs [0011]-[0019], fig. 1 | 1-13 |
| A | JP 2005-326963 A (FUJITSU TEN LTD) 24 November 2005 (2005-11-24) paragraphs [0105]-[0109], fig. 1-3 | 1-13 |

☐ Further documents are listed in the continuation of Box C.    ☑ See patent family annex.

| \* Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 April 2023** | **25 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/006794**

| Patent document cited in search report | | | Publication date (day/month/year) | Patent family member(s) | Publication date (day/month/year) |
|---|---|---|---|---|---|
| JP | 2021-196322 | A | 27 December 2021 | (Family: none) | |
| JP | 2014-194686 | A | 09 October 2014 | (Family: none) | |
| JP | 2014-169872 | A | 18 September 2014 | (Family: none) | |
| JP | 2021-140764 | A | 16 September 2021 | CN 113359125 A entire text, all drawings | |
| JP | 2017-181450 | A | 05 October 2017 | US 2020/0300969 A1 paragraphs [0018]-[0026], fig. 1 WO 2017/170799 A1 | |
| JP | 2005-326963 | A | 24 November 2005 | (Family: none) | |

Form PCT/ISA/210 (patent family annex) (January 2015)

**EP 4 503 599 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017181099 A
- JP 2022052014 A